(19) Europäisches Patentamt
European Patent Office
Office européen des brevets

(11) **EP 1 739 667 B1**

(12) **EUROPEAN PATENT SPECIFICATION**

(45) Date of publication and mention
of the grant of the patent:
**28.07.2010 Bulletin 2010/30**

(21) Application number: **05734677.7**

(22) Date of filing: **21.04.2005**

(51) Int Cl.:
*G11B 7/24* (2006.01)

(86) International application number:
**PCT/JP2005/007648**

(87) International publication number:
**WO 2005/104116 (03.11.2005 Gazette 2005/44)**

(54) **OPTICAL RECORDING MEDIUM**

OPTISCHES AUFZEICHNUNGSMEDIUM

SUPPORT D'ENREGISTREMENT OPTIQUE

(84) Designated Contracting States:
**DE GB**

(30) Priority: **22.04.2004 JP 2004127149**

(43) Date of publication of application:
**03.01.2007 Bulletin 2007/01**

(73) Proprietor: **Mitsubishi Kagaku Media Co., Ltd.**
**Minato-ku**
**Tokyo (JP)**

(72) Inventors:
• **AGA, Masafumi,**
**Mitsubishi Kagaku Media Co., Ltd.**
**Tokyo 1080014 (JP)**

• **NODA, Yoshihiro,**
**Mitsubishi Kagaku Media Co., Ltd.**
**Tokyo 1080014 (JP)**
• **FUROMOTO, S.,**
**Mitsubishi Kagaku Media Co., Ltd.**
**Tokyo 1080014 (JP)**

(74) Representative: **Wiedemann, Peter**
**Hoffmann - Eitle**
**Patent- und Rechtsanwälte**
**Arabellastrasse 4**
**81925 München (DE)**

(56) References cited:
EP-A- 1 047 055    EP-A- 1 288 932
JP-A- 2 118 930    JP-A- 2003 091 868
JP-A- 2003 296 978    US-A1- 2003 026 937
US-A1- 2003 179 693    US-B1- 6 270 611

**Description**

Technical Field

The present invention relates to an optical recording medium, or more specifically, to an optical recording medium having multiple recording layers.

Background Art

In recent years, various optical recording media including a CD-R, a CD-RW, a MO, and the like are widely known as external storage devices for an information processing device such as a computer owing to storage of a large volume of information and to ease of random access. For example, a typical CD-R or the like having an organic dye-containing recording layer has a lamination structure which includes a dye recording layer and a reflective layer in this order on a transparent disk substrate and has a protective layer for covering these recording layer and reflective layer. Recording and reading are performed by use of a laser beam through the substrate.

One measure for further increasing recording capacities of these optical recording media is to provide a single medium with multiple recording layers. To meet such a demand, the present applicant has filed the application in terms of an optical recording medium including two dye recording layers provided on a transparent first substrate of a disk shape while interposing an intermediate layer made of ultraviolet curing resin therebetween (see Patent Document 1). In this technique, it is possible to record information on the respective recording layers by use of a laser beam to be irradiated from one surface side of the optical recording medium, and it is possible to read signals out of the one surface side as the optical recording medium of a dual layer type at the time of reading as well.

Patent Document 1: Japanese Unexamined Patent Publication No. 2003 - 331463

EP 1 288 932 A describes a multi-layer recording medium with plural UV curing resin layers as intermediate layer corresponding to the preamble of claim 1. Similarly, JP 2003 091868 A, US 6 270 611 B1, US 2003/026937 and JP 2003 296978 describe multi-layer recording media with an intermediate layer of plural resin layers and an UV curing resin as outermost resin layer.

Disclosure of the Invention

Problems to be solved by the Invention

Incidentally, as a result of further studies, it was found out that there might be a case where a recording characteristic of the second recording layer on a far side relative to the substrate was degraded when performing recording and reading of the information on the optical recording medium having the two dye recording layers provided on the transparent substrate while interposing the intermediate layer. The reason of degradation in the recording characteristic of the second recording layer in terms of the optical recording medium having the two dye recording layers is not always clear. However, one of conceivable reasons is deformation of groove shapes formed on the intermediate layer made of the ultraviolet curing resin attributable to heat generation associated with a chemical change of the dye contained in the recording layer during recording information on the second recording layer.

In this context, the present invention has been made to improve a degrading recording characteristic of an optical recording medium including multiple recording layers. In particular, the present invention has been made to improve a degrading recording characteristic of a recording layer which is to be formed on an intermediate layer. That is, an object of the present invention is to provide an optical recording medium having fine recording characteristics of multiple recording layers provided on a transparent substrate.

Means for solving the Problems

To solve the problem, the inventors have conducted extensive studies. As described previously, one of conceivable reasons for causing degradation in the recording characteristic of the recording layer formed on the intermediate layer is deformation of groove shapes formed on the intermediate layer attributable to heat generation in the recording layer. Therefore, it is conceivable that the recording characteristic of the recording layer can be improved by suppressing the deformation of the grooves formed on the intermediate layer. From this point of view, the following measures can be cited as measures for achieving improvement in the recording characteristic of the recording layer to be formed on the intermediate layer. Specifically, a first measure is a measure for suppressing deformation of the grooves attributable to the heat by increasing heat resistance of the intermediate layer. A second measure is a measure for suppressing deformation of the grooves on the intermediate layer attributable to the heat by increasing a thermal radiation property for the heat generated on the recording layer so as to reduce the heat diffused into the intermediate layer. A third measure is a combination of the first and the second measures. That is, it is the measure for suppressing deformation of the grooves on the intermediate layer by striking a balance between the heat resistance of the intermediate layer and the thermal radiation property of the recording layer.

As a result of further studies in order to realize these three measures, the inventors found out that, by forming the intermediate layer with multiple resin layers, it is possible (a) to impart necessary functions to the respective resin layers, (b) to virtually approximate properties between the intermediate layer and the substrate, and (c) to impart a higher performance to the intermediate layer than the substrate. Moreover, as a result of further studies, the inventors found out that it is possible (d) to enhance the thermal radiation property of the second recording layer by controlling a thickness of a' reflective layer and the like. Furthermore, it was found possible to render a power margin of the recording layer to be formed on the intermediate layer wider than a power margin of the recording layer to be formed on the substrate by using these factors (a) to (d) either singly or in combination as appropriate.

The invention is defined by the appended claims.

Specifically, according to the present invention, there is provided an optical recording medium including at least two recording layers provided on a substrate and capable of recording and reading information by use of irradiated light, and an intermediate layer provided between the two recording layers, which is **characterized in that**, among the two recording layers, the recording layer on a near side in relation to the substrate is defined as a first recording layer while the recording layer on a far side in relation to the substrate is defined as a second recording layer, that a predetermined groove serving as a recording track is formed on a surface on an opposite side to a substrate side out of both surfaces of the intermediate layer, that the intermediate layer is formed of multiple resin layers, that the resin layer on which the predetermined groove serving as the recording track is formed is defined as an outermost resin layer, and that a power margin of the second recording layer is wider than a power margin of the first recording layer.

Here, the power margin means a range of recording power of a laser which can achieve a predetermined recording characteristic. Therefore, a wide power margin means a wide range of recording power of a laser which can achieve a predetermined recording characteristic. While considering individual variability in recording laser power of drives and other factors, a wider power margin is preferred. For this reason, a "recording layer having a wide power margin" is equivalent to excellence of the recording characteristic. There are various concrete methods conceivable for measuring the power margin. As an example, there is a mode of finding a recording power range of a laser, which renders a jitter of a recording mark measured under predetermined conditions equal to or below a predetermined value (equal to or below 9%, for example). The concrete methods of measuring the power margin will be described later.

It is only necessary to realize the three measures respectively in order to widen the power margin of the second recording layer. Various concrete methods are conceivable. As examples of preferable methods of realization, there are methods listed below. The following methods may be used either singly or in combination as appropriate.

The resin having a different elastic modulus from those of other layers constituting the intermediate layer is applied for the outermost resin layers.

In the present invention, the elastic modulus at 150˚C of the resin used for the outermost resin layer is set equal to or above 300 MPa.

The substrate is formed of resin to satisfy (the elastic modulus at 150˚C of the resin used for the outermost resin layer) ≥ (an elastic modulus at 150˚C of the resin constituting the substrate).

The elastic modulus at 150˚C of the resin used for the outermost resin layer is set higher than an elastic modulus of resin used for other resin layers constituting the intermediate layer.

A shrinkage ratio of the resin used for the outermost resin layer is set equal to or above 6%.

The thickness of the outermost resin layer is set equal to or above 5% of the thickness of the entire intermediate layer.

Resin having an elastic modulus at 30˚C equal to or below 1500 MPa is used for the resin layers other than the outermost resin layer.

Resin having a shrinkage ratio equal to or below 4% is used for the resin layers other than the outermost resin layer.

The intermediate layer is formed of three resin layers.

The following aspect can be cited as a preferred realization method for widening the power margin in the second recording layer.

Specifically, it is the aspect to form the intermediate layer of a first layer and a second layer and to apply different types of resin having different elastic moduli to the respective layers.

In this aspect, it is preferable that the intermediate layer be formed of the first layer and the second layer, and that the resin constituting the second layer have a higher elastic modulus than that of the resin constituting the first layer. By constituting the second layer by applying the resin which shows high elastic modules, deformation of grooves formed on the second layer is prevented.

In this aspect, it is preferable that the intermediate layer be formed of the first layer and the second layer, and that the resin constituting the second layer have an elastic modulus at 150˚C equal to or above 300 MPa. By using the resin having the above-mentioned elastic modulus, it is possible to enhance a recording characteristic of a recording layer which contacts the second layer.

In this aspect, it is preferable that a shrinkage ratio of the resin constituting the second layer be equal to or above 6%. By the characteristic of the shrinkage ratio of the resin constituting the second layer being equal to or above 6%, a peeling property of a resin stamper is improved.

In this aspect, it is preferable that a relation between a thickness of the first layer (Da) and a thickness of the second layer (Db) satisfy (Da/Db) = (1/4) to (4/1). When the relation between the thickness of the first layer (Da) and the thickness of the second layer (Db) constituting the intermediate layer of a laminated structure falls in this range, it is possible to suppress warpage of the substrate effectively.

In this aspect, it is preferable that the intermediate layer include the first layer made of resin having an elastic modulus at 30°C equal to or below 1500 MPa, and the second layer laminated on the first layer and made of resin having an elastic modulus at 150°C equal to or above 300 MPa.

In this aspect, it is preferable that a shrinkage ratio of the resin constituting the first layer be equal to or below 4%.

Moreover, it is possible to cite the following as an example of a preferred realization method for widening the power margin in the second recording layer.

In the present invention, it is preferable to form the resin layers constituting the intermediate layer by use of ultraviolet curing resin. The ultraviolet curing resin has high transparency and requires a short curing time period, and is therefore advantageous in manufacturing. Moreover, it is also easy to control a layer configuration of the resin layers constituting the intermediate layer. For this reason, it is easier to widen the power margin in the second recording layer.

Meanwhile, in the present invention, it is preferable that the recording layer contain an organic dye. At the time of recording, the organic dye generates heat either by meltdown or by a chemical reaction. Then, by this heat generation, deformation of the grooves formed on the intermediate layer is apt to occur. For this reason, by applying the organic dye to the recording layer, an effect of the present invention is more saliently produced.

Meanwhile, in the present invention, it is preferable that a first reflective layer be provided between the first recording layer and the intermediate layer, that a second reflective layer be provided on the second recording layer, and that a value (a thickness of the second reflective layer) / (a thickness of the first reflective layer) be set in a range from 2 to 20 inclusive. That is, by rendering the thickness of the second reflective layer sufficiently thicker than the thickness of the first reflective layer, it is easier to ensure a thermal radiation property of the second recording layer. As a result, it is easier to achieve a favorable recording characteristic such as the power margin of the second recording layer.

Effect of the Invention

According to the present invention, a recording characteristic of an optical recording medium provided with multiple recording layers formed on a transparent substrate is improved.

Best mode for carrying out the Invention

The best mode to carry out the invention (hereinafter referred to as an embodiment) will be described below by use of drawings as appropriate. It is to be noted, however, that the present invention is not limited only to the embodiment described below and that various changes are applicable within the range of the scope thereof. Moreover, the drawings are used for explaining the embodiment and do not represent actual dimensions.

An optical recording medium applying this embodiment includes at least two recording layers provided on a substrate and capable of recording and reading information by use of irradiated light, and an intermediate layer provided between the two recording layers, and is **characterized in that,** among the two recording layers, the recording layer on a near side in relation to the substrate is defined as a first recording layer while the recording layer on a far side in relation to the substrate is defined as a second substrate, that a predetermined groove serving as a recording track is formed on a surface on an opposite side to a substrate side out of both surfaces of the intermediate layer, that the intermediate layer is formed of multiple resin layers, that the resin layer on which the predetermined groove serving as the recording track is formed is defined as an outermost resin layer, and that a power margin of the second recording layer is wider than a power margin of the first recording layer.

Here, the power margin means a range of recording power of a laser which can achieve a predetermined recording characteristic. Therefore, a wide power margin means a wide range of recording power of a laser which can achieve a predetermined recording characteristic. There are various concrete methods conceivable for measuring the power margin. As an example, there is a mode of finding a recording power range of a laser, which renders a jitter of a recording mark measured under predetermined conditions equal to or below a predetermined value.

As a method of defining the power margin, it is possible to cite the following method to be more precise. Specifically, under a standard determined depending on the type of an optical disk such as DVD, recording and jitter measurement are conducted. Then, recording power factors P1 and P2 satisfying the jitter equal to or below 9% are obtained. In addition, a value (P2 - P 1) / {(P2 + P1) / 2} is calculated and this value is defined as the power margin.

To widen the power margin of the second recording layer, it is preferable to suppress deformation of the grooves formed on the intermediate layer as described previously. The following measures (a) to (c) can be cited as measures to suppress this deformation of the grooves:

(a) a measure for suppressing deformation of the grooves attributable to the heat by increasing heat resistance of the intermediate layer;
(b) a measure for suppressing deformation of the grooves on the intermediate layer attributable to the heat by increasing a thermal radiation property for the heat generated on the recording layer so as to reduce the heat diffused on the intermediate layer; and
(c) a measure for suppressing deformation of the grooves on the intermediate layer by striking a balance between the heat resistance of the intermediate layer and the thermal radiation property of the recording layer.

To be more specific, the following measures can be cited as the measures for increasing the heat resistance of the intermediate layer. First, there is a measure to form the intermediate layer (in particular, the intermediate layer in the vicinity of a surface where the grooves are formed that exerts a large influence to deformation of the grooves formed on the intermediate layer) by use of a hard material. Next, it is possible to cite a measure to approximate the heat resistance of the intermediate layer (in particular, the intermediate layer in the vicinity of the surface where the grooves are formed that exerts a large influence to deformation of the grooves formed on the intermediate layer) to that of the substrate. Further, it is possible to cite a measure to set the heat resistance of the intermediate layer (in particular, the intermediate layer in the vicinity of the surface where the grooves are formed that exerts a large influence to deformation of the grooves formed on the intermediate layer) higher than that of the substrate. Meanwhile, a measure for increasing the thermal radiation property for the heat generated on the second recording layer includes a mode of appropriately controlling factors (such as the thickness of the second recording layer or the thickness of the reflective layer) that exert an influence to the thermal radiation property of the second recording layer. These measures may be applied either singly or in combination as appropriate.
The concrete realization measures will be described below in detail.

(I) Realization by use of the intermediate layer

A concrete example of rendering the power margin of the second recording layer wider than the power margin of the first recording layer will be shown below.
Specifically, the intermediate layer is formed of multiple resin layers, and the resin layer on which the predetermined groove serving as the recording track is formed is defined as the outermost resin layer. Further, at least one of the following conditions (1) to (3) should be satisfied.

(1) The outermost resin layer applies resin having a different elastic modulus from those of other layers constituting the intermediate layer.
(2) The elastic modulus at 150˚C of the resin used for the outermost resin layer is set equal to or above 300 MPa.
(3) When the substrate is formed of resin, (the elastic modulus at 150˚C of the resin used for the outermost resin layer) ≥ (an elastic modulus at 150˚C of the resin constituting the substrate) is satisfied.

Such an optical recording medium will be described by using a schematic drawing.

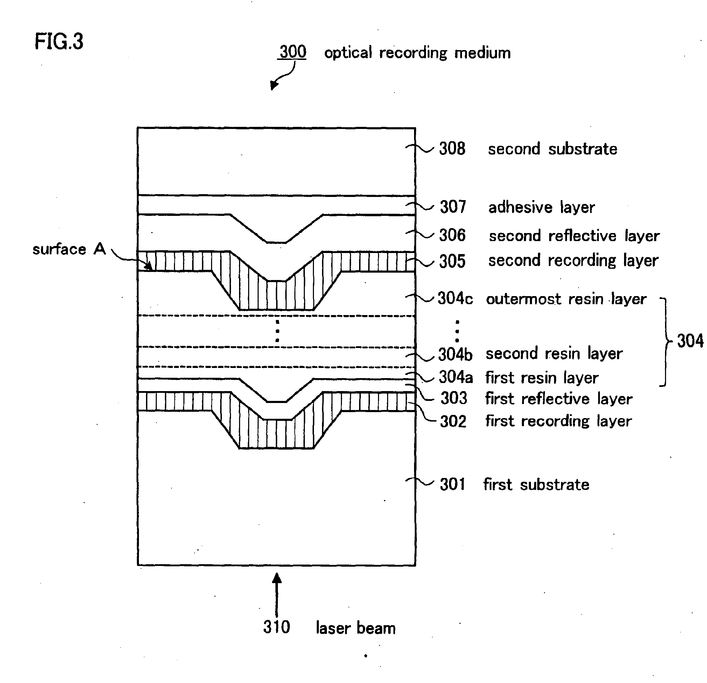

Figure 3 is a schematic drawing showing an example of an optical recording medium applying this embodiment. In an optical recording medium 300 shown in Fig. 3, an optically transparent first substrate 301 in a disk shape provided with a groove serving as a recording track formed on a surface thereof, a first recording layer 302 located on this first substrate 301 and subject to recording and reading of information by use of a laser beam 310 irradiated through the first substrate 301, a translucent first reflective layer 303 for splitting power of the laser beam 310 which is incident from the first substrate 301 side, and an intermediate layer 304 are laminated. In addition, on the intermediate layer 304, a second recording layer 305 subject to recording and reading of information by use of the laser beam 310 passing through the intermediate layer 304, and a second reflective layer 306 for reflecting the laser beam 310 that passes through the second recording layer 305 are sequentially laminated. Moreover, the optical recording medium 300 has a structure in which an adhesive layer 307, and a second substrate 308 which is a dummy substrate constituting an outermost layer are sequentially laminated on the second reflective layer 306.
Here, in terms of the intermediate layer 304, the predetermined groove serving as the recording track is formed on a surface (a surface A) on the opposite side to the first substrate 301 side. Moreover, the intermediate layer 304 is formed of multiple resin layers (a first resin layer 304a, a second resin layer 304b,..., and an outermost resin layer 304c).
As shown in Fig. 3, optical information is recorded on the first recording layer 302 and the recorded optical information is read by the laser beam 310 irradiated from the first substrate 301 side. Further, part of the laser beam 310 passes through the translucent first reflective layer 303 and is irradiated on the second recording layer 305 via the intermediate layer 304, whereby recording and reading of the optical information are executed as similar to the first recording layer 302.

Here, normally, part of the laser beam 310 reflected by the first reflective layer 303 and part of the laser beam 310 reflected by the second reflective layer 306 are respectively used for focusing (not shown) to condense the laser beam 310. Meanwhile, normally, the second substrate 308 which is the dummy substrate is laminated on the second reflective layer 306 by the adhesive layer 307. Moreover, the second substrate 308 constitutes the outermost layer of the optical recording medium 300 and imparts rigidity to the optical recording medium 300. In this way, stability of the shape of the optical recording medium 300 is maintained. As described previously, the grooves in concavo-convex shapes are respectively formed on the first substrate 301 and the intermediate layer 304, which respectively constitute the recording tracks.

Here, in the optical recording medium 300 to which this embodiment is applied, "optical transmittance (or transparency)" means optical transmittance relative to a wavelength of the light irradiated on the first recording layer 302 and the second recording layer 305 in order to record and read the optical information.

To be more specific, the "optical transmittance (or transparency)" means presence of transparency equal to or above 50%, or more preferably equal to or above 60% in terms of the wavelength of the light for recording and reading. Here, an upper limit of the optical transmittance is ideally equal to 100%.

As shown in Fig. 3, the resin layer on which the predetermined groove serving as the recording track is formed constitutes the outermost resin layer 304c. The outermost resin layer 304c is expected to satisfy at least one of the following conditions (1) to (3).

(1) The outermost resin layer 304c applies resin having a different elastic modulus from those of other layers (the first resin layer 304a, the second resin layer 304b, and so on) constituting the intermediate layer 304.
(2) The elastic modulus at 150˚C of the resin used for the outermost resin layer 304c is set equal to or above 300 MPa.
(3) When forming the first substrate 301 by use of resin, (the elastic modulus at 150˚C of the resin used for the outermost resin layer 304c) ≥ (an elastic modulus at 150˚C of the resin constituting the first substrate 301) is satisfied.

Here, the outermost resin layer 304c is the layer having a function to achieve a favorable recording characteristic of the second recording layer 305 to be formed on the intermediate layer 304. That is, the groove shape formed on the outermost resin layer 304c is apt to be deformed by heat generation of the recording layer at the time of recording on the second recording layer 305 (this heat generation is considered attributable to heat associated with a chemical reaction or the like of an organic dye when the recording layer contains such an organic dye, or to heat associated with a structural change of an inorganic material when the recording layer contains such an inorganic material).

As a result of studies conducted by the inventors of the present invention, it is found out that the recording characteristic (such as a jitter characteristic or a Push-Pull characteristic) of the second recording layer 305 tends to be unsatisfactory when the groove shape on the outermost resin layer 304c is significantly deformed. For this reason, in the present invention, at least one of the foregoing conditions (1) to (3) is satisfied. To be more specific, these conditions (1) to (3) indicate that it is preferable to form the outermost resin layer 304c by use of hard resin configured to suppress deformation of the groove (resin having high heat resistance).

In terms of the conditions (1) to (3), the following arrangement is more preferable. Specifically, the elastic modulus at 150˚C of the resin used for the outermost resin layer 304c is set higher than the elastic modulus at 150˚C of the resin used for other resin layers (the first resin layer 304a, the second resin layer 304b, and so on) constituting the intermediate layer 304. This is because the resin having the high elastic modulus generally possesses hardness. Here, the elastic modulus is a dynamic elastic modulus which is measured with a given dynamic viscoelasticity measuring instrument.

In the present invention, there are two reasons to highlight on the elastic modulus at 150˚C of the resin. Specifically, the first reason is to suppress deformation of the groove attributable to the heat generation of the second recording layer 305 by increasing the heat resistance of the outermost resin layer 304c. Meanwhile, the second reason is to suppress deformation of the groove formed on the outermost resin layer 304c attributable to the heat generation of the second recording layer 305 by considering a balance between a material used for the outermost resin layer 304c and a material used for the first substrate 301.

The first reason will now be described.

The second recording layer 305 causes the heat generation when recording is performed. Therefore, the temperature of the outermost resin layer 304c, on which the groove serving as the recording track is formed, is also raised by the heat generation of the recording layer. If the outermost resin layer 304c is able to maintain the property as an elastic body even in such a high-temperature state, then it is conceivable that deformation of the outermost resin layer 304c is susceptible to suppression. When deformation of the outermost resin layer 304c is suppressed, it is easier to improve the recording characteristic of the second recording layer 305. Therefore, it is thought to be preferable that the outermost resin layer 304c have a predetermined elastic modulus at a high temperature of 150˚C. In other words, it is thought to be preferable that the outermost resin layer 304c maintain the property as the elastic body at a high temperature of 150˚C.

To be more specific, by using the resin having the elastic modulus at 150˚C equal to or above 300 MPa for the outermost resin layer 304c provided with the groove serving as the recording track on the surface thereof, it is possible to suppress deformation of the groove which is considered attributable to the heat generation of the second recording layer 305 at the time of recording information. Moreover, it is considered possible to widen the power margin by suppressing deformation of this groove.

The reason for the above-described idea concerning the improvement in the recording characteristic of the second recording layer 305 by forming the outermost resin layer 304c by use of the resin having the elastic modulus at 150˚C equal to or above 300 MPa is based on consideration in terms of a result of experiment obtained from an optical disk which uses a dye for a recording layer.

Specifically, in the field of optical disks using a dye for the recording layer, ultraviolet curing resin having an elastic modulus at 150˚C around 200 MPa, for example, has been conventionally used. When an intermediate layer is formed between two recording layers containing a dye by use of the above-mentioned resin having a relatively low elastic modulus at a high temperature (150˚C), a groove shape formed on the intermediate layer turned out to be deformable by heat generation associated with a chemical reaction of the dye included in the recording layer at the time of recording on the second recording layer. As a consequence, it is found out that the recording characteristic of the second recording layer was apt to be degraded.

On the contrary, when the outermost resin layer 304c provided with the groove serving as the recording track on the surface thereof is formed by use of the resin having the elastic modulus at 150˚C equal to or above 300 MPa, the groove of the recording track formed on the surface of the second recording layer 305 has sufficient strength. For this reason, deformation of the groove which is considered attributable to an exothermic reaction of the dye is suppressed at the time of recording information on the second recording layer 305.

Next, the second reason will be described.

The second reason is for suppressing deformation of the groove formed on the outermost resin layer 304c attributable to the heat generation of the second recording layer 305 by considering the balance between the material used for the outermost resin layer 304c and the material used for the first substrate 301. Specifically, when the first substrate 301 is made of resin, the first substrate 301 is usually made of resin having sufficient hardness in order to suppress deformation of the groove on the first substrate 301 caused by the heat generation of the first recording layer 302 at the time of recording. This takes place as similar to the case of the outermost resin layer 304c in order to improve the recording characteristic of the first recording layer 302 by suppressing the deformation of the groove on the first substrate 301 at the time of recording.

Therefore, on the assumption of the high-temperature state at the time of recording, it is estimated that the improvement in the recording characteristic (widening the power margin, for example) of the second recording layer 305 will be surely achieved by setting (the elastic modulus at 150˚C of the resin used for the outermost resin layer 304c) ≥ (the elastic modulus at 150˚C of the resin constituting the first substrate 301).

In the field of the optical disks, polycarbonate resin is normally used for forming the first substrate 301 by use of resin. Polycarbonate resin has a glass transition point at about 150˚C. Here, the elastic modulus at 150˚C of polycarbonate resin is around 950 MPa. Moreover, by using the polycarbonate resin for the first substrate 301, it is easier to improve the recording characteristic of the first recording layer 302.

For this reason, the improvement in the recording characteristic of the second recording layer 305 is expected by setting the elastic modulus at 150˚C of the resin constituting the outermost resin layer 304c equal to or above the elastic modulus at 150˚C of the polycarbonate resin. For example, when the elastic modulus at 150˚C of the resin used for the outermost resin layer 304c is set equal to or above 950 MPa, it is thought to be possible to impart hardness virtually equal to or above that of the first substrate 301 to the intermediate layer 304. As a result, it is easier to exhibit an advantage of a capability of setting the power margin of the second recording layer 305 wider than the power margin of the first recording layer 302, for example.

As described above, from the viewpoint of suppressing the groove deformation at the time of recording and widening the power margin of the second recording layer 305, it is preferable to set the elastic modulus at 150˚C of the resin used for the outermost resin layer 304c as high as possible. In the case of setting the elastic modulus at 150˚C of the resin used for the outermost resin layer 304c equal to or above 300 MPa, the elastic modulus is set preferably equal to or above 330 MPa, more preferably equal to or above 350 MPa, even more preferably equal to or above 500 MPa, still more preferably equal to or above 750 MPa, particularly preferably equal to or above 950 MPa, or most preferably equal to or above 1000 MPa. Here, as described above, the elastic modulus is the dynamic elastic modulus which is measured with a given dynamic viscoelasticity measuring instrument. It is to be noted, however, that the elastic modulus at 150˚C of the resin constituting the outermost resin layer 304c is normally set equal to or below 2500 MPa from the viewpoint of productivity.

Here, when the elastic modulus at 150˚C is equal to or above 300 MPa, a glass transition temperature of the resin generally tends to become higher. To be more specific, the glass transition temperature of the resin having the elastic modulus at 150˚C equal to or above 300 MPa usually becomes equal to or above 140˚C. Meanwhile, an upper limit of the glass transition temperature is usually equal to 200˚C.

In the meanwhile, from the viewpoint of setting the hardness of the outermost resin layer 304c equivalent to or above the first substrate 301 and thereby widening the power margin of the second recording layer 305, when setting "(the elastic modulus at 150˚C of the resin used for the outermost resin layer 304c) ≥ (the elastic modulus at 150˚C of the resin constituting the first substrate 301)", it is preferable to establish the relation between the elastic modulus at 150˚C of the resin constituting the first substrate 301 and the elastic modulus at 150˚C of the resin used for the outermost resin layer 304c as follows.

To be more specific, it is preferable to establish (the elastic modulus at 150˚C of the resin used for the outermost resin layer 304c) > (the elastic modulus at 150˚C of the resin constituting the first substrate 301), or more preferable to establish (the elastic modulus at 150˚C of the resin used for the outermost resin layer 304c) ≥ 1.05 × (the elastic modulus at 150˚C of the resin constituting the first substrate 301), or even more preferable to establish (the elastic modulus at 150˚C of the resin used for the outermost resin layer 304c) ≥ 1.1 × (the elastic modulus at 150˚C of the resin constituting the first substrate 301).

On the other hand, from a practical perspective, (the elastic modulus at 150˚C of the resin used for the outermost resin layer 304c) ≤ 3 × (the elastic modulus at 150˚C of the resin constituting the first substrate 301) holds true.

Here, even in the case of "using the resin having the elastic modulus at 150˚C equal to or above 300 MPa for the outermost resin layer 304c" or in the case of establishing "(the elastic modulus at 150˚C of the resin used for the outermost resin layer 304c) ≥ (the elastic modulus at 150˚C of the resin constituting the first substrate 301)", the intermediate layer 304 is formed of the multiple resin layers (the first resin layer 304a, the second resin layer 304b, and so on). At this time, the resin layers other than the outermost resin layer 304c (the first resin layer 304a, the second resin layer 304b, and so on) may apply the same resin as the outermost resin layer 304c or may apply different resin.

When the same resin is used for the outermost resin layer 304c and the resin layers other than the outermost resin layer 304c (the first resin layer 304a, the second resin layer 304b, and so on), the intermediate layer 304 has a laminated structure of the multiple resin layers formed of the same resin. In this case, it is possible to consider that the intermediate layer 304 is virtually formed as a single layer. Moreover, when the outermost resin layer 304c and the resin layers other than the outermost resin layer 304c (the first resin layer 304a, the second resin layer 304b, and so on) are respectively made of different types of resin, it is easier to obtain the intermediate layer 304 having a higher performance as described later.

A shrinkage ratio of the resin used for the outermost resin layer 304c is set usually equal to or above 6%, preferably equal to or above 9%, more preferably equal to or above 9.5%, or even more preferably equal to or above 10%. However, the shrinkage ratio is usually set equal to or below 20%. Here, the shrinkage ratio means a shrinkage ratio which is measured in accordance with the specific gravity method. Alternatively, it is also possible to measure the shrinkage ratio in accordance with JIS K7112 and the like.

It is preferable that the outermost resin layer 304c is formed by use of the resin having the shrinkage ratio equal to or above 6 %. In this case, a peeling property from a resin stamper becomes favorable when forming the groove for the recording track on the outermost resin layer 304c by use of the resin stamper (here, the resin stamper will be described later). Moreover, a conceivable reason why the peeling property of the resin stamper becomes favorable is that a slight strain or clearance is caused by contraction of the resin filled in a groove of the resin stamper at the time of curing, for example. By achieving the favorable peeling property of the resin stamper, the groove shape formed on the outermost resin layer 304c becomes favorable. For this reason, it is easier to widen the power margin of the second recording layer 305.

On the contrary, when the peeling property of the resin stamper is insufficient, part of the outermost resin layer 304c is fixed to the resin stamper. This means that a surface of the outermost resin layer 304c is ripped off. Moreover, this also means that smoothness on the surface of the outermost resin layer 304c is damaged. Accordingly, a signal noise may be increased and a jitter may be defective. As a result, the power margin of the second recording layer 305 tends to become narrower.

As described above, it is preferable that the resin used for the outermost resin layer 304c have the shrinkage ratio equal to or above a predetermined level in order to ensure the peeling property of the resin stamper.

Meanwhile, as a result of forming the outermost resin layer 304c by use of the resin having the relatively high shrinkage ratio, contraction of the outermost resin layer 304c tends to be increased at the time of film forming. This means that the optical recording medium 300 is apt to warp.

With this in mind, it is also preferable to apply the following aspect in this embodiment. Specifically, it is possible to form the intermediate layer 304 by use of multiple resin layers and to impart functions required for the intermediate layer 304 separately to the respective resin layers. To be more specific, as a consequence of adopting predetermined resin to the outermost resin layer 304c, the power margin of the second recording layer 305 may be improved whereas the optical recording medium 300 may warp easily. In this case, it is possible to apply resin having a small elastic modulus at a normal temperature (resin having softness) or resin having a low shrinkage ratio to the resin used for the resin layers located below the outermost resin layer 304c. By adopting such resin, it is possible to suppress contraction of the entire intermediate layer 304. Moreover, by adopting such resin, it is possible to relax a stress of the entire intermediate layer 304. As a result, it is possible to reduce warpage of the optical recording medium 300, and so forth.

Here, to suppress the warpage of the entire intermediate layer 304 more favorably, the resin used for the resin layers located below the outermost resin layer 304c preferably applies resin having a small elastic modulus at a normal temperature and a low shrinkage ratio.

From this point of view, the elastic modulus at 30˚C of the resin used for the resin layers located below the outermost resin layer 304c (the first resin layer 304a, the second resin layer 304b or the like) is set usually equal to or below 1500 MPa, preferably equal to or below 1300 MPa, more preferably equal to or below 700 MPa, even more preferably equal to or below 680 MPa, or particularly preferably equal to or below 650 MPa. By setting the elastic modulus at 30˚C of the resin used for the resin layers located below the outermost resin layer 304c (the first resin layer 304a, the second resin layer 304b or the like) in the above-described range, it is possible to effectively suppress warpage of the first substrate 301 that may occur at the time of forming films of these resin layers.

Meanwhile, from a practical perspective, the elastic modulus at 30˚C of the resin used for the resin layers located below the outermost resin layer 304c is equal to or above 40 MPa.

In this embodiment, an advantage of forming the intermediate layer 304 by use of the multiple resin layers is capabilities to control the elastic moduli of the types of resin used for the respective resin layers precisely and thereby to reduce the warpage of the first substrate 301 easily.

For example, in the case of controlling the elastic moduli at 30˚C of the types of resin used for the resin layers located below the outermost resin layer 304c (the first resin layer 304a, the second resin layer 304b, and so on), it is possible to use resin having a smaller value of the elastic modulus as the relevant resin layer moves downward. That is, as the method of controlling the elastic moduli of the types of resin used for the respective resin layers, it is possible to cite a method of gradually reducing the elastic moduli at 30˚C of the applicable types of resin in the order of the resin layer contacting a bottom surface of the outermost resin layer 304c, ..., the second resin layer 304b, and the first resin layer 304a. In this way, it is expected to be possible to reduce the warpage of the first substrate 301 more effectively. Here, the respective elastic moduli at 30˚C of the types of resin used for the respective resin layers may be changed so as to reduce the warpage of the first substrate 301. A concrete example of the method of changing the respective elastic moduli of the types of resin used for the respective resin layers will be described below.

As a concrete example, it is possible to cite a configuration to define a certain resin layer out of the multiple resin layers as a reference, and on the assumption that the elastic modulus of the resin used for this layer as 1, to set the elastic modulus at 30˚C of the resin, used for the resin layer contacting an upper side of this resin layer equal to or above 3/2, and to set the elastic modulus at 30˚C of the resin used for the resin layer contacting a lower side of this resin layer equal to or below 2/3.

Meanwhile, for example, it is also possible to cite the following method as the method of controlling the elastic moduli at 30˚C of the types of resin used for the respective resin layers (the first resin layer 304a, the second resin layer 304b, and so on) located below the outermost resin layer 304c. Specifically, when the elastic modulus at 30˚C of the resin used for the outermost resin layer 304c is defined as 1, the elastic modulus at 30˚C of the resin used for the resin layer contacting a lower surface of the outermost resin layer 304c is set equal to or below 2/3. Moreover, in terms of the resin layers located further on the lower side of the resin layer contacting the lower surface of the outermost resin layer 304c, the elastic moduli of the types of resin used for the respective resin layers may be set approximately equal to one another. Here, to set the elastic moduli equal, it is possible to cite a method of using the same type of resin for the respective resin layers, for example.

Meanwhile, the shrinkage ratios of the types of resin used for the resin layers located below the outermost resin layer 304c (the first resin layer 304a, the second resin layer 304b, and so on) are normally set equal to or below 4%, preferably equal to or below 3.5%, or more preferably equal to or below 3%. By setting the shrinkage ratios of the types of resin used for the resin layers located below the outermost resin layer 304c (the first resin layer 304a, the second resin layer 304b, and so on) within the above-described range, it is possible to effectively suppress warpage of the first substrate 301 which occurs at the time of forming films of these resin layers. However, the shrinkage ratios are ideally equal to 0%. Here, the shrinkage ratio means the shrinkage ratio which is measured in accordance with the specific gravity method. Alternatively, it is also possible to measure the shrinkage ratio in accordance with JIS K7112 and the like.

In this embodiment, an advantage of forming the intermediate layer 304 by use of the multiple resin layers is capabilities to control the shrinkage ratios of the types of resin used for the respective resin layers precisely and thereby to reduce the warpage of the first substrate 301 efficiently.

For example, in the case of controlling the shrinkage ratios of the types of resin used for the resin layers located below the outermost resin layer 304c (the first resin layer 304a, the second resin layer 304b, and so on), it is possible to use resin having a smaller value of the shrinkage ratio as the relevant resin layer moves downward. That is, as the method of controlling the shrinkage ratios of the types of resin used for the respective resin layers, it is possible to cite a method of gradually reducing the shrinkage ratios of the applicable types of resin in the order of the resin layer contacting the bottom surface of the outermost resin layer 304c, ..., the second resin layer 304b, and the first resin layer 304a. In this way, it is expected to be possible to reduce the warpage of the first substrate 301 more effectively. Here, the respective shrinkage ratios of the types of resin used for the respective resin layers may be changed so as to reduce the warpage of the first substrate 301.

A concrete example of the method of changing the respective shrinkage ratios of the types of resin used for the respective resin layers will be described below. As a concrete example, it is possible to cite a configuration to define a certain resin layer out of the multiple layers as a reference, and on the assumption that the shrinkage ratio of the resin used for this layer as 1, to set the shrinkage ratio of the resin used for the resin layer contacting the upper side of this resin layer equal to or above 1.1, and to set the shrinkage ratio of the resin used for the resin layer contacting the lower side of this resin layer equal to or below 0.9.

Meanwhile, for example, it is also possible to cite the following method as the method of controlling the shrinkage ratios of the types of resin used for the respective resin layers (the first resin layer 304a, the second resin layer 304b, and so on) located below the outermost resin layer 304c.

Specifically, when the shrinkage ratio of the resin used for the outermost resin layer 304c is defined as 1, the shrinkage ratio of the resin used for the resin layer contacting the lower surface of the outermost resin layer 304c is set equal to or below 0.9. Moreover, in terms of the resin layers located further on the lower side of the resin layer contacting the lower surface of the outermost resin layer 304c, the shrinkage ratios of the types of resin used for the respective resin layers may be set approximately equal to one another. Here, to set the shrinkage ratios equal, it is possible to cite the method of using the same type of resin for the respective resin layers, for example.

Here, it is possible to select the resin used for the first resin layer 304a without being bound by the method of controlling the elastic modulus or the method of controlling the shrinkage ratio described above, because there may be a case where it is necessary to apply resin having a high elastic modulus or a high shrinkage ratio to the first resin layer 304a for the purpose of protecting the first reflective layer 303 and the like. For example, it is possible to reduce an influence to the warpage of the entire optical recording medium 300 by reducing the thickness of the first resin layer 304a. Accordingly, it is possible to use resin having a high shrinkage ratio.

When the first resin layer 304a is provided for the above-mentioned purpose, the resin used for the first resin layer 304a may apply resin which can be used for the outermost resin layer 304c. From this point of view, the elastic modulus at 30˚C of the applicable resin is set usually equal to or above 1500 MPa or preferably equal to or above 2000 MPa. Meanwhile, the elastic modulus at 30˚C of the resin used for the first resin layer 304a is set usually equal to or below 4000 MPa. Here, the elastic modulus is a dynamic elastic modulus which is measured with a given dynamic viscoelasticity measuring instrument.

Meanwhile, the shrinkage ratio of the resin used for the first resin layer 304a is usually equal to or above 6%, preferably equal to or above 9%, more preferably equal to or above 9.5%, or even more preferably equal to or above 10%. However, the shrinkage ratio is usually set equal to or below 20%. Here, the shrinkage ratio means a shrinkage ratio which is measured in accordance with the specific gravity method. Alternatively, it is also possible to measure the shrinkage ratio in accordance with JIS K7112 and the like.

Meanwhile, a thickness of the first resin layer 304a is set usually equal to or above 0.1% or preferably equal to or above 1% relative to the thickness of the entire intermediate layer 304 in order to protect the first reflective layer 303 and the like. In the meantime, the thickness of the first resin layer 304a is set usually equal to or below 10% relative to the thickness of the entire intermediate layer 304 in order not to cause an influence to the warpage of the optical recording medium 300. To be more specific, the thickness of the first resin layer 304a is set usually equal to or above 0.05 $\mu$m or preferably equal to or above 0.5 $\mu$m in order to protect the first reflective layer 303. In the meanwhile, the thickness of the first resin layer 304a is set usually equal to or below 5 $\mu$m in order not to cause an influence to the warpage of the optical recording medium 300.

The total thickness of the first resin layer 304a, the second resin layer 304b, ..., and the outermost resin layer 304c (the thickness of the intermediate layer 304) is set usually equal to or above 5 $\mu$m or preferably equal to or above 10 $\mu$m. Meanwhile, the total thickness of the first resin layer 304a, the second resin layer 304b, ..., and the outermost resin layer 304c (the thickness of the intermediate layer 304) is set usually equal to or below 200 $\mu$m or preferably equal to or below 100 $\mu$m.

The thickness of the outermost resin layer 304c is set as follows. Specifically, the outermost resin layer 304c only needs to have a sufficient thickness to the extent capable of suppressing deformation of the groove serving as the recording track when recording on the second recording layer 305 is performed. Of course, deformation of the groove on the outermost resin layer 304c can be suppressed further not only by forming the hard outermost resin layer 304c but also by forming hard resin layers (1 resin layer or more than 1 resin layers), which are located adjacently to the lower side of the outermost resin layer 304c, on some level. That is, it is also possible to suppress deformation of the groove serving as the recording track by using the multiple resin layers, contacting one another, including outermost resin layer 304c. However, from the standpoint of industrial production, it is preferable to ensure the thickness of the outermost resin layer 304c to the extent that allows the outermost resin layer 304c to achieve suppression of deformation of the groove by itself at the time of recording on the second recording layer 305.

With that in mind, the thickness of the outermost resin layer 304c is set usually equal to or above 5% relative to the thickness of the entire intermediate layer 304, preferably equal to or above 10%, more preferably equal to or above 25%, even more preferably equal to or above 30%, particularly preferably equal to or above 40%, or most preferably equal to or above 50%. Within the above-described range, it is possible to suppress deformation of the groove effectively at the time of recording on the second recording layer 305. In particular, by setting the thickness of the outermost resin layer 304c equal to or above 25% relative to the thickness of the entire intermediate layer 304, it is easier to suppress deformation of the groove by use merely of the outermost resin layer 304c at the time of recording on the second recording layer 305.

Meanwhile, in light of effective suppression and the like of the warpage of the first substrate 301, the thickness of the outermost resin layer 304c is usually set equal to or below 80% relative to the thickness of the entire intermediate layer 304. The thickness of the outermost resin layer 304c is preferably set equal to or below 75% relative to the thickness of the entire intermediate layer 304. More preferably, the thickness of the outermost resin layer 304c is set equal to or below 70% relative to the thickness of the entire intermediate layer 304.

The number of the resin layers constituting the intermediate layer 304 is not particularly limited. To suppress the warpage of the first substrate 301 favorably, the number of the resin layers is set usually within 10 layers, preferably within 5 layers, or more preferably within 4 layers. Meanwhile, the number of the resin layer should be equal to or more than 2 layers.

However, in light of producing efficiency, it is preferable to set the number of the resin layers constituting the intermediate layer 304 in a range from 2 layers to 5 layers inclusive. It is particularly preferable in light of manufacturing efficiency to arrange the number of the resin layers constituting the intermediate layer 304 so as to form a two-layer or three-layer structure.

The elastic moduli and the shrinkage ratios of the types of resin used for the respective layers of the intermediate layer 304 (the first resin layer 304a, the second resin layer 304b, ..., and the outermost resin layer 304c) can be changed by appropriately adjusting compositions contained in the resin, degrees of crystallinity as well as degrees of cross-linkage of the resin, and the like.

The types of resin used for the resin layers will be described below.

As for materials (resin) constituting the respective resin layers (the first resin layer 304a, the second resin layer 304b, ..., and the outermost resin layer 304c), for example, it is possible to cite thermoplastic resin, thermosetting resin, electron beam curable resin, ultraviolet curing resin (including a delayed curing type), and the like. The materials may be appropriately selected from the above-described types of resin.

The thermoplastic resin, the thermosetting resin or the like is dissolved into an appropriate solvent to prepare a coating solution. Thereafter, a resin layer can be formed by applying and then drying (heating) this coating solution.

The ultraviolet curing resin is used on its own or dissolved into an appropriate solvent to prepare a coating solution. Thereafter, a resin layer can be formed by applying and then curing the coating solution by irradiation of ultraviolet rays. These materials may be used either singly or in combination.

As an applying method, methods such as a coating method including spin coating method, a casting method, and the like are used. Among them, the spin coating method is preferred. A resin layer using high-viscosity resin can be applied and formed by screen printing or the like. In terms of the ultraviolet curing resin, it is preferable to use one in a liquid state at a temperature in a range from 20˚C to 40˚C in light of productivity because it is possible to coat the resin without using a solvent. Moreover, it is preferable to prepare the coating solution to have viscosity in a range from 20 mPa·s to 1000 mPa·s.

Here, the predetermined groove serving as the recording track is formed on the surface of the outermost resin layer 304c. The method of forming the groove is not particularly limited. Usually, the groove is formed in the following method. Specifically, a coating solution for the outermost resin layer 304c is applied. Then, a stamper provided with a groove shape to be transferred to the outermost resin layer 304c is pressed onto a surface of the coat (the stamper is preferably a stamper made of resin as will be described later). In this state, the coat is subjected to curing, drying or the like to form the outermost resin layer 304c. In this way, the predetermined groove shape is formed on the surface of the outermost resin layer 304c. A concrete manufacturing method of the intermediate layer 304 will be described later.

Among the materials constituting the respective resin layers (the first resin layer 304a, the second resin layer 304b, ..., the outermost resin layer 304c), the ultraviolet curing resin is preferred in terms of manufacturing advantages including high transparency and short curing time. The ultraviolet curing resin includes radical ultraviolet curing resin and cationic ultraviolet curing resin. Any of these types is applicable.

The cationic ultraviolet curing resin has a property of a small shrinkage ratio and is therefore used preferably for reducing the warpage of the optical recording medium 300. To be more specific, the cationic ultraviolet curing resin is preferably used for the resin layers other than the outermost resin layer 304c.

A composition containing an ultraviolet curing compound and a photopolymerization initiator as essential components is used as the radical ultraviolet curing resin. As the ultraviolet curing compound, it is possible to use monofunctional (meth)acrylate and polyfunctional (meth)acrylate as polymeric monomer components. These materials can be used either singly or in combination of two or more types, respectively. Here, acrylate and methacrylate are collectively referred to as (meth)acrylate.

The monofunctional (meth)acrylate, for instance, includes (meth)acrylate having a group such as methyl, ethyl, propyl, butyl, amyl, 2-ethylhexyl, octyl, nonyl, dodecyl, hexadecyl, octadecyl, cyclohexyl, benzyl, methoxyethyl, butoxyethyl, phenoxyethyl, nonylphenoxyethyl, tetrahydrofurfuryl, glycidyl, 2-hydroxyethyl, 2-hydroxypropyl, 3-chloro-2-hydroxypropyl, dimethylaminoethyl, diethylaminoethyl, nonylphenoxyethyltetrahydrofurfuryl, caprolactone modified tetrahydrofurfuryl, isobornyl, dicyclopentanyl, dicyclopentenyl or dicyclopentenyloxyethyl as a substituent group.

The polyfunctional (meth)acrylate, for instance, includes di(meth)acrylate of 1,3-butyleneglycol, 1,4-butanediol, 1,5-pentanediol, 3-methyl-1,5-pentanediol, 1,6-hexanediol, neopentylglycol, 1,8-octanediol, 1,9-nonanediol, tricyclodecandimethanol, ethyleneglycol, polyethyleneglycol, propyleneglycol, dipropyleneglycol, tripropyleneglycol or polypropyleneglycol, di(meth)acrylate of tris(2-hydroxyethyl)isocyanurate, and the like.

Moreover, there are di(meth)acrylate of diol obtained by adding at least 4 mol of ethyleneoxide or propyleneoxide to 1 mol of neopentylglycol, di(meth)acrylate of diol obtained by adding 2 mol of ethyleneoxide or propyleneoxide to 1 mol of bisphenol A, di(meth)acrylate or tri(meth)acrylate of triol obtained by adding at least 3 mol of ethyleneoxide or propyleneoxide to 1 mol of trimethylolpropane, di(meth)acrylate of diol obtained by adding at least 4 mol of ethyleneoxide or propyleneoxide to 1 mol of bisphenol A, trimethylolpropanetri(meth)acrylate, pentaerythritoltri(meth)acrylate, poly(meth)acrylate of dipentaerythritol, ethyleneoxide modified phosphoric acid (meth)acrylate, ethyleneoxide modified alkylated phosphoric acid (meth)acrylate, and the like.

Meanwhile, a substance which can be used simultaneously with these polymeric monomers includes a polymeric oligomer such as polyester(meth)acrylate, polyether(meth)acrylate, epoxy(meth)acrylate or urethane(meth)acrylate. In addition, a photopolymerization initiator is usually mixed with the radical ultraviolet curing resin. It is preferable to apply the photopolymerization initiator of a molecular cleavage type or a hydrogen abstraction type. The photopolymerization initiator of the molecular cleavage type, for instance, includes benzoin isobutylether, 2,4-diethylthioxantone, 2-isopropylthioxantone, benzyl, 2,4,6-trimethylbenzoyldiphenylphosphineoxide, 2-benzyl-2-dimethylamino-1-(4-morpholinophenyl)-butane-1-on, bis(2,6-dimethoxybenzoyl)-2,4,4-trimethylpenthylphospheinoxide, and the like.

Moreover, it is also possible to use 1-hydroxycyclohexylphenylketone, benzoinethylether, benzyldimethylketal, 2-hydroxy-2-methyl-1-phenylpropane-1-on, 1-(4-isopropylphenyl)-2-hydroxy-2-methylpropane-1-on, 2-methyl-1-(4-methylthiophenyl)-2-morphorinopropane-1-on, and the like together with these photopolymerization initiator. The photopolymerization initiator of the hydrogen abstraction type, for instance, includes benzophenone, 4-phenylbenzophenone, isophthalphenone, 4-benzoyl-4'-methyl-diphenylsulfide, and the like.

Meanwhile, it is also possible to use a sensitizer together with these photopolymerization initiators. The sensitizer, for instance, includes trimethylamine, methyldimethanolamine, triethanolamine, p-diethylaminoacetophenone, p-dimethylaminoethylbenzoate, p-dimethylaminoisoamylbenzoate, N,N-dimethylbenzylamine, 4,4'-bis(diethylamino)benzophenone, and the like.

The cationic ultraviolet curing resin includes epoxy resin containing a photopolymerization initiator of the cationic polymerization type. The epoxy resin may be any one of bisphenol A-epichlorohydrin type, alicyclic epoxy, long-chain aliphatic type, brominated epoxy resin, glycidyl ester type, glycidyl ether type, heterocyclic system, and the like. As for the epoxy resin, it is preferable to use one having a small content of free chlorine and chlorine ions. The amount of chlorine is set preferably equal to or below 1 wt% or more preferably equal to or below 0.5 wt%.

The photopolymerization initiator of the cationic polymerization type includes a sulfonium salt, an iodonium salt, a diazonium salt, and the like. The iodonium salt, for instance, includes diphenyliodonium hexafluorophosphate, diphenyliodonium hexafluoroantimonate, diphenyliodonium tetrafluoroborate, diphenyliodonium tetrakis(pentafluorophenyl) borate, bis(dodecylphenyl)iodonium hexafluorophosphate, bis(dodecylphenyl)iodonium hexafluoroantimonate, bis(dodecylphenyl)iodonium tetrafluoroborate, bis(dodecylphenyl)iodonium tetrakis(pentafluorophenyl)borate, and the like.

Moreover, it is also possible to cite 4-methylphenyl-4-(1-methylethyl)phenyliodonium hexafluorophosphate, 4-methylphenyl-4-(1-methylethyl)phenyliodonium hexafluoroantimonate, 4-methylphenyl-4-(1-methylethyl)phenyliodonium tetrafluoroborate, 4-methylphenyl-4-(1-methylethyl)phenyliodonium tetrakis(pentafluorophenyl)borate, and the like.

A rate of the cationic photopolymerization initiator to 100 parts by weight of the cationic ultraviolet curing resin is usually set in a range from 0.1 to 20 parts by weight, or preferably in a range from 0.2 to 5 parts by weight. Here, in order to use wavelengths in a near-ultraviolet region and in a visible region out of a wavelength band of an ultraviolet light source more effectively, it is possible to use a publicly known optical sensitizer at the same time. In this case, the optical sensitizer, for instance, includes anthracene, phenothiazine, benzylmethylketal, benzophenone, acetophenone, and the like.

Meanwhile, in order to improve various properties of the ultraviolet curing resin, it is possible to mix other additives such as a thermal polymerization inhibitor, an antioxidant as represented by hindered phenol, hindered amine, phosphite and the like, a plasticizer, a silane coupling agent as represented by epoxysilane, mercaptosilane, (meta) acrylsilane and the like when appropriate. Among these additives, one having excellent solubility to the ultraviolet curing compound and one not hindering ultraviolet transparency is selected for use.

In this embodiment, in terms of the resin layers (the first resin layer 304a, the second resin layer 304b, ..., the outermost resin layer 304c) used for the intermediate layer 304, it is preferable to apply "resin having a high elastic modulus at a high temperature (such as 150°C)", "resin having a relatively large shrinkage ratio", "resin having a relatively small elastic modulus at a normal temperature (such as 30°C)", and "resin having a relatively small shrinkage ratio" appropriately depending on roles of the respective resin layers.

Concrete methods of obtaining the types of resin having these four properties will be described below.
(Method of obtaining the resin having a high elastic modulus at a high temperature (such as 150°C))
In this embodiment, it is preferable to form a resin layer (particularly the outermost resin layer 304c) by use of resin designed to achieve a high elastic modulus at a high temperature. Although various modes are conceivable as the method of forming a resin layer such as this, a concrete mode in the case of forming the resin layer by use of ultraviolet curing resin (namely, radical ultraviolet curing resin) will be described below.
To increase the elastic modulus of ultraviolet curing resin at a high temperature, Brownian movement of a crosslink structure obtained by curing should be restrained. That is, crosslink density should be increased.
To be more specific, when forming ultraviolet curing resin by use of an acrylic monomer, it is possible to obtain ultraviolet curing resin having a high elastic modulus at a high temperature by carrying out the following modes (1) to (3), for example.

(1) Application of an acrylic monomer capable of increasing crosslink density.
(2) Application of an acrylic monomer having a rigid structure as a crosslink structure.
(3) Application of a combination of an acrylic monomer capable of increasing crosslink density and an acrylic monomer having a rigid structure as a crosslink structure.

The acrylic monomer capable of increasing crosslink density includes a polyfunctional acrylic monomer (polyfunctional (meth)acrylate) having small molecular weight for each acryloyl group. Such polyfunctional (meth)acrylate, for instance, includes di(meth)acrylate of 1,3-butyleneglycol, 1,4-butanediol, 1,5-pentanediol, 3-methyl-1,5-pentanediol, 1,6-hexanediol, neopentylglycol, 1,8-octanediol, 1,9-nonanediol, tricyclodecanedimethanol, ethyleneglycol, polyethyleneglycol, propyleneglycol, dipropyleneglycol, tripropyleneglycol or polypropyleneglycol, di(meth)acrylate of tris(2-hydroxyethyl)isocyanurate, and the like.

Moreover, there are di(meth)acrylate of diol obtained by adding at least 4 mol of ethyleneoxide or propyleneoxide to 1 mol of neopentylglycol, di(meth)acrylate of diol obtained by adding 2 mol of ethyleneoxide or propyleneoxide to 1 mol of bisphenol A, di(meth)acrylate of diol obtained by adding at least 4 mol of ethyleneoxide or propyleneoxide to 1 mol of bisphenol A, ethyleneoxide modified phosphoric acid (meth)acrylate, ethyleneoxide modified alkylated phosphoric acid (meth)acrylate, trimethylolpropanetri(meth)acrylate, di(meth)acrylate or tri(meth)acrylate of triol obtained by adding at least 3 mol of ethyleneoxide or propyleneoxide to 1 mol of trimethylolpropane, pentaerythritoltri(meth)acrylate, pentaerythritoltetra(meth)acrylate, tri(meth)acrylate or tetra(meth)acrylate of tetraalcohol obtained by adding at least 4 mol of ethyleneoxide or propyleneoxide to 1 mol of pentaerythritol, poly(meth)acrylate of dipentaerythritol (such as dipentaerythritolpenta(meth)acrylate or dipentaerythritolhexa(meth)acrylate), penta(meth)acrylate or hexa(meth)acrylate of hexaalcohol obtained by adding at least 6 mol of ethyleneoxide or propyleneoxide to 1 mol of dipentaerythritol, and the like.

Among them, the following materials are preferred in light of a capability of increasing the elastic modulus at a high temperature, namely, polyfunctional (meth)acrylate including trimethylolpropanetri(meth)acrylate, tri(meth)acrylate of triol obtained by adding at least 3 mol of ethyleneoxide or propyleneoxide to 1 mol of trimethylolpropane, pentaerythritoltri(meth)acrylate, pentaerythritoltetra(meth)acrylate, tri(meth)acrylate or tetra(meth)acrylate of tetraalcohol obtained by adding at least 4 mol of ethyleneoxide or propyleneoxide to 1 mol of pentaerythritol, dipentaerythritolpenta (meth)acrylate, dipentaerythritolhexa(meth)acrylate, penta(meth)acrylate or hexa(meth)acrylate of hexaalcohol obtained by adding at least 6 mol of ethyleneoxide or propyleneoxide to 1 mol of dipentaerythritol, and the like.

In light of increasing the elastic modulus at a high temperature, it is more preferable to use any of trimethylolpropanetri(meth)acrylate, pentaerythritoltri(meth)acrylate, pentaerythritoltetra(meth)acrylate, dipentaerythritolpenta (meth)acrylate, and dipentaerythritolhexa(meth)acrylate.

Next, the acrylic monomer having a rigid structure as a crosslink structure may be an acrylic monomer having a rigid cyclic structure.
Concrete examples of such an acrylic monomer include norbornanedimethanoldiacrylate, norbornanediethanoldi(meth) acrylate, di(meth)acrylate of diol obtained by adding 2 mol of ethyleneoxide or propyleneoxide to norbornanedimethanol, tricyclodecanedimethanoldi(meth)acrylate, tricyclodecanediethanoldi(meth)acrylate, di(meth)acrylate of diol obtained by adding 2 mol of ethyleneoxide or propyleneoxide to tricyclodecanedimethanol, pentacyclopentadecanedimethanoldi (meth)acrylate, pentacyclopentadecanediethanoldi(meth)acrylate, di(meth)acrylate of diol obtained by adding 2 mol of ethyleneoxide or propyleneoxide to pentacyclopentadecanedimethanol, di(meth)acrylate of diol obtained by adding 2 mol of ethyleneoxide or propyleneoxide to pentacyclopentadecanediethanol, and the like.

Among them, tricyclodecanedimethanoldi(meth)acrylate, tricyclodecanediethanoldi(meth)acrylate, and pentacyclopentadecanedimethanoldi(meth)acrylate are preferred in light of a capability of increasing the elastic modulus at a high temperature.

In addition, it is also possible to cite bis(2-acryloyloxyethyl)hydroxyethylisocyanurate, bis(2-acryloyloxypropyl)hydroxypropylisocyanurate, bis(2-acryloyloxybutyl)hydroxybutylisocyanurate, bis(2-methacryloyloxyethyl)hydroxyethylisocyanurate, bis(2-methacryloyloxypropyl)hydroxypropylisocyanurate, bis(2-methacryloyloxybutyl)hydroxybutylisocyanurate, tris(2-acryloyloxyethyl)isocyanurate, tris(2-acryloyloxypropyl)isocyanurate, tris(2-acryloyloxybutyl)isocyanurate, tris(2-methacryloyloxyethyl)isocyanurate, tris(2-methacryloyloxypropyl)isocyanurate, tris(2-methacryloyloxybutyl)isocyanurate, and the like.

Here, tricyclodecanedimethanoldi(meth)acrylate and tricyclodecanediethanoldi(meth)acrylate are particularly preferred in light of a capability of increasing the elastic modulus at a high temperature.

The following process should be executed when applying a combination of the acrylic monomer capable of increasing crosslink density and the acrylic monomer having a rigid structure as a crosslink structure. Specifically, one or more concrete compounds of the acryl monomers capable of increasing crosslink density as described above are selected. Moreover, one or more concrete compounds of the acryl monomers having rigid structures as crosslink structures as described above are selected. Then, these compounds should be combined in an arbitrary proportion to meet a desired elastic modulus.

(Method of obtaining the resin having a relatively high shrinkage ratio)

In this embodiment, it is preferable to form a resin layer (particularly the outermost resin layer 304c) by use of resin having a relatively large shrinkage ratio. Although various modes are conceivable as the method of forming a resin layer such as this, a concrete mode in the case of forming the resin layer by use of ultraviolet curing resin (namely, radical ultraviolet curing resin) will be described below.

In the case of the ultraviolet curing resin, a degree of shrinkage means a degree of hardening shrinkage. The degree of hardening shrinkage is a ratio of density change at the time of hardening relative to density before hardening. For this reason, to increase the degree of shrinkage, it is only necessary to increase the density change at the time of hardening. To be more specific, in the case of forming the ultraviolet curing resin by use of an acrylic monomer, it is only necessary to increase density of acryloyl groups. In other words, it is only necessary to use an acrylic monomer which can increase the crosslink density.

The acrylic monomer capable of increasing the crosslink density includes a polyfunctional acrylic monomer (polyfunctional (meth)acrylate) having small molecular weight for each acryloyl group. As a concrete example of such a polyfunctional acrylic monomer (polyfunctional (meth)acrylate), a substance similar to the polyfunctional (meth)acrylate as described in the "method of obtaining the resin having a high elastic modulus at a high temperature (such as 150˚C)" can be used.

In the case of obtaining the resin having a high elastic modulus at a high temperature (such as 150˚C) and a relatively large shrinkage ratio, it is only necessary to combine an acrylic monomer having a rigid structure as a crosslink structure as described in the "method of obtaining the resin having a high elastic modulus at a high temperature (such as 150˚C)", for example. The content of the acrylic monomer having the rigid structure as the crosslink structure should be set to an appropriate content for obtaining a desired elastic modulus and a desired shrinkage ratio.

(Method of obtaining the resin having a small elastic modulus at a normal temperature (such as 30˚C))

In this embodiment, it is preferable to form a resin layer (such as the second resin layer 304b) by use of resin having a small elastic modulus at 30˚C. Although various modes are conceivable as the method of forming this resin layer, a concrete mode in the case of forming the resin layer by use of ultraviolet curing resin (namely, radical ultraviolet curing resin) will be described below.

In order to reduce the elastic modulus of the ultraviolet curing resin at 30˚C, it is only necessary to reduce the density change at the time of hardening. To be more specific, in the case of forming the ultraviolet curing resin by use of an acrylic monomer, it is possible to cite a method of combining an acrylic oligomer having a large molecular weight for each acryloyl group and a flexible structure with a monofunctional acrylic monomer. A content ratio between the acrylic oligomer having the flexible structure and the monofunctional acrylic monomer may be appropriately controlled to obtain a desired elastic modulus.

Concrete examples of the acrylic oligomer having the flexible structure include acrylic oligomers, such as urethane(meth)acrylate composed of polyether or polyesterdiol :or polyalkyleneglycol diacrylate.

Concrete examples of the monofunctional acrylic monomer include ethyl(meth)acrylate, butyl(meth)acrylate, 2-ethylhexyl (meth)acrylate, nonyl(meth)acrylate, tridecyl(meth)acrylate, hexadecyl(meth)acrylate, octadecyl(meth)acrylate, isoamyl (meth)acrylate, isodecyl(meth)acrylate, isostearyl(meth)acrylate, 2-hydroxyethyl(meth)acrylate, 3-chloro-2-hydroxypropyl(meth)acrylate, methoxyethyl(meth)acrylate, butoxyethyl(meth)acrylate, nonylphenoxyethyl(meth)acrylate, 2-hydroxy-3-phenoxypropyl(meth)acrylate, and the like.

(Method of obtaining the resin having a small shrinkage ratio)

In this embodiment, it is preferable to form a resin layer (such as the second resin layer 304b) by use of resin having a small shrinkage ratio. Although various modes are conceivable as the method of forming a resin layer such as this, a concrete mode in the case of forming the resin layer by use of ultraviolet curing resin (namely, radical ultraviolet curing resin) will be described below.

In the case of the ultraviolet curing resin, the degree of shrinkage means the degree of hardening shrinkage. The degree of hardening shrinkage is the ratio of density change at the time of hardening relative to density before hardening. For this reason, to reduce the degree of shrinkage, it is only necessary to reduce the density change at the time of hardening. To be more specific, in the case of forming the ultraviolet curing resin by use of an acrylic monomer, it is only necessary to combine an acrylic oligomer having a large molecular weight for each acryloyl group and a small number of acryloyl groups in a molecule with an acrylic monomer. A content ratio between the acrylic oligomer and the acrylic monomer may be appropriately controlled to obtain a desired elastic modulus.

As a concrete example of the acrylic oligomer, a substance similar to those described in the "method of obtaining the resin having a small elastic modulus at a normal temperature (such as 30˚C)" can be used. As a concrete example of the acrylic monomer, a substance similar to the monofunctional acrylic monomers as described in the "method of obtaining the resin having a small elastic modulus at a normal temperature (such as 30˚C)" can be used.

(II) Points of concern in terms of the recording layers

In this embodiment, at least two recording layers are provided. Although there is no upper limit in terms of the number of the recording layers, the recording layers will be equal to or below 10 layers in practice. In light of practical use, it is most preferable to provide 2 to 4 layers.

The materials used for the recording layers (which include the first recording layer 302 and the second recording layer 305 in Fig. 3) of the optical recording medium 300 are not particularly limited, and it is possible to use any of inorganic materials and organic materials.

The inorganic materials include given alloy materials. The recording layers made of these alloy materials causes structural changes by applying heat from outside. Normally, a difference in the refractive index is caused by such a structural change. Detection of recorded information signals is carried out by use of variations of a difference in the reflectivity and a phase difference attributable to this difference in the refractive index. Concrete examples of the alloy materials, for instance, include SbTe, GeTe, GeSbTe, InSbTe, AgSbTe, AgInSbTe, GeSb, GeSbSn, InGeSbTe, InGeSbSnTe materials, and the like. Among them, it is preferable to apply a composition containing Sb as a main component of the recording layer in order to accelerate a crystallization speed.

Here, in the case of using the inorganic material for the recording layer, protective layers are usually provided above and below the recording layer. The protective layer is usually made of a dielectric material (such as $ZnS-SiO_2$).

In terms of the recording layers, the protective layers, and the like when using the inorganic material for the recording layers, it is possible to employ publicly known techniques (such as a material of the recording layer, a thickness of the recording layer, a method of forming film of the recording layer, a material of the protective layer, a thickness of the protective layer or a method of forming the film of the protective layer) applicable to a phase-change optical recording medium.

The organic materials include organic dyes. Such organic dyes include azo dyes, cyanine dyes, phthalocyanine dyes, and the like.

In the present invention, it is preferable to use dyes for the recording layers (which include the first recording layer 302 and the second recording layer 305 in Fig. 3). Particularly, an effect of the present invention is prominently exhibited by use of a dye for the second recording layer 305. That is, when the dye is used for the second recording layer 305, the groove shape formed on the outermost resin layer 304c is apt to be deformed by heat generation of the dye at the time of recording. For this reason, the use of the resin having the predetermined elastic modulus for the outermost resin layer 304c will have great significance.

The following is a preferred aspect in light of widening the power margin of the second recording layer 305.

Specifically, it is to render the thickness of the second recording layer 305 as thin as possible with due consideration to other recording characteristics and optical characteristics. By reducing the thickness of the second recording layer 305, it is possible to decrease heat generation of the second recording layer 305 at the time of recording. In this way, it is possible to increase a thermal radiation property of the second recording layer 305. As a result, it is possible to suppress deformation of the groove on the intermediate layer 304 and thereby to widen the power margin of the second recording layer 305.

Details of the recording layers will be described later in "(IV) Preferred aspect of the optical recording medium".

(III) Points of concern in terms of other layers

One effective measure for widening the power margin of the second recording layer 305 will be described below by using Fig. 3.

The concept of improving the recording characteristic of the second recording layer 305 by controlling the elastic modulus and the shrinkage ratio of the resin used for the outermost resin layer 304c has been described above. The concept of ensuring the favorable recording characteristic of the second recording layer 305 by controlling the relation between the elastic modulus of the resin used for the outermost resin layer 304c and the elastic modulus of the resin used for the first substrate 301 has also been described above.

Besides, it is preferable to ensure the thermal radiation property of the second recording layer 305 by increasing a thickness of the second reflective layer 306 relative to a thickness of the first reflective layer 303. By ensuring the thermal radiation property of the second recording layer 305, it is possible to reduce an influence of heat from the second recording layer 305 on the outermost resin layer 304c. As a result, it is possible to suppress deformation of the groove on the outermost resin layer 304c. Moreover, it is easier to widen the power margin of the second recording layer 305. However, when controlling the thermal radiation property of the second recording layer 305, it is needless to say that the recording characteristics other than the power margin must be considered as well.

In order to achieve the favorable recording characteristics (the power margin, in particular) of the second recording layer 305 while ensuring the thermal radiation property of the second recording layer 305, it is preferable to set up the following relation between the second reflective layer 306 and the first reflective layer 303. Specifically, a proportion (the thickness of the second reflective layer 306) / (the thickness of the first reflective layer 303) is set preferably equal to or above 2, more preferably equal to or above 3, or particularly preferably equal to or above 5. Meanwhile, in light of a balance with the recording characteristics other than the power margin, the proportion (the thickness of the second reflective layer 306) / (the thickness of the first reflective layer 303) is set preferably equal to or below 20, more preferably equal to or below 15, or even more preferably equal to or below 10. By setting the above-described range, it is easier to widen the power margin of the second recording 305 as compared to the power margin of the first recording layer 302.

In addition, configurations of the first substrate 301, the first reflective layer 303, the second reflective layer 306, the adhesive layer 307, the second substrate 308, and the like in Fig.3 are similar to those used in "(IV) Preferred aspect of the optical recording medium" to be described below. Accordingly, those configurations will be described in that section as appropriate.

(IV) Preferred aspect of the optical recording medium (the optical recording medium applying the intermediate layer of a two-layer structure)

In light of widening the power margin of the second recording layer, in the present invention, it is preferable that the intermediate layer apply a two-layer structure and a laminated structure including at least two type of resin having different elastic moduli. That is, it is preferable that the intermediate layer include a first layer and a second layer, and that the respective layers apply the types of resin having different elastic moduli. A preferred example of an optical recording medium applying the above-described intermediate layer will be described.

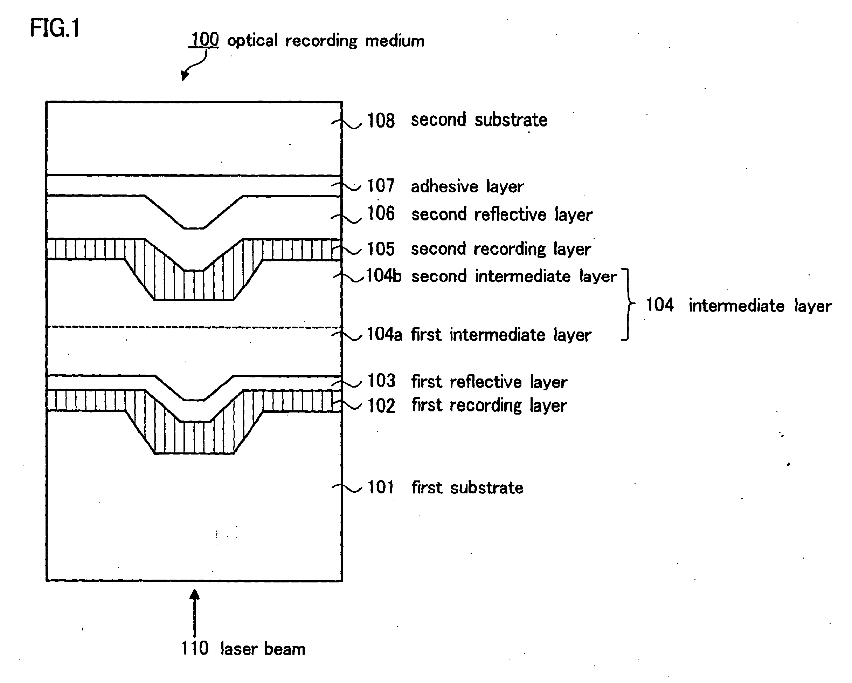

Fig. 1 is a view for explaining a preferred example of an optical recording medium applying this embodiment. An optical recording medium 100 shown in Fig. 1 includes a first substrate 101 of a disk shape which is provided with a groove serving as a recording track on a surface thereof and is made of an optically transparent material. A first recording layer 102 containing a dye which is subject to recording and reading of information by use of a laser beam 110 irradiated via the first substrate 101, and a translucent first reflective layer 103 for splitting power of the laser beam 110 incident from the first substrate 101 side are laminated on this first substrate 101. In addition, a first intermediate layer 104a, a second intermediate layer 104b, a second recording layer 105 containing a dye which is subject to recording and reading of information by use of the laser beam 110 passing through the first intermediate layer 104a and the second intermediate layer 104b, and a second reflective layer 106 for reflecting the laser beam 110 passing through the second recording layer 105 are laminated on the first reflective layer 103. Moreover, the optical recording medium 100 has a structure in which an adhesive layer 107 and a second substrate 108 which is a dummy substrate constituting an outermost layer are sequentially laminated on the second reflective layer 106. Here, the first intermediate layer 104a and the second intermediate layer 104b are formed of ultraviolet curing resin which is an optical transparent material. Moreover, the second intermediate layer 104b, on a surface of which a groove is formed, thereby constituting an outermost resin layer.

It is preferable that the second intermediate layer 104b apply a type of resin having a different elastic modulus from that of the first intermediate layer 104a. More preferably, the elastic modulus of the resin used for the second intermediate layer 104b is set higher than the elastic modulus of the resin used for the first intermediate layer 104a. Alternatively, it is preferable to set the elastic modulus at 150˚C of the resin used for forming the second intermediate layer 104b equal to or above 300 MPa. In this way, it is preferable to form the second intermediate layer 104b by use of hard resin that can suppress deformation of the groove associated with heat generation of the second recording layer 105.

As shown in Fig. 1, optical information is recorded on the first recording layer 102 containing a dye and the recorded optical information is reproduced by use of the laser beam 110 irradiated from the first substrate 101 side. Moreover, part of the laser beam 110 passes through the translucent first reflective layer 103 and is irradiated on the second recording layer 105 containing a dye via the first intermediate layer 104a and the second intermediate layer 104b, and recording and reading of optical information are executed as similar to the first recording layer 102.

Here, part of the laser beam 110 reflected by the first reflective layer 103 and part of the laser beam 110 reflected by the second reflective layer 106 are respectively used for focusing (not shown) to condense the laser beam 110. Meanwhile, the second substrate 108 which is a dummy substrate is laminated on the second reflective layer 106 by the adhesive layer 107. Moreover, the second substrate 108 constitutes the outermost layer of the optical recording medium 100 and imparts rigidity to the optical recording medium 100. In this way, stability of the shape of the optical recording medium 100 is maintained. Moreover, the grooves in concavo-convex shapes are respectively formed on the first substrate 101 and the second intermediate layer 104b, which respectively constitute the recording tracks.

Here, in terms of the optical recording medium 100 applying this embodiment, "optical transmittance (or transparency)" means optical transmittance relative to a wavelength of the light irradiated on the first recording layer 102 and the second recording layer 105 respectively containing a dye in order to record and reproduce the optical information. To be more specific, the "optical transmittance (or transparency)" means presence of transparency equal to or above 50%, or more preferably equal to or above 60% in terms of the wavelength of the light for recording and reading. Here, an upper limit of the optical transmittance is ideally equal to 100%.

In the optical recording medium 100 applying this embodiment, the intermediate layer 104 interposed between the first recording layer 102 and the second recording layer 105 is formed as a laminated body including the two types of resin having the different elastic moduli. Meanwhile, the elastic modulus at 150˚C of the resin constituting the second intermediate layer 104b is set equal to or above 300 MPa. When the elastic modulus at 150˚C of the resin used for the second intermediate layer 104b provided with the groove serving as the recording track on the surface thereof is set equal to or above 300 MPa, the second intermediate layer 104b is preferably made of the resin having the elastic modulus preferably equal to or above 330 MPa or more preferably equal to or above 350 MPa. Here, the elastic modulus is a dynamic elastic modulus which is measured with a given dynamic viscoelasticity measuring instrument. When the elastic modulus at 150˚C of the resin used for the second intermediate layer 104b is set equal to or above 300 MPa, the resin used for the first intermediate layer 104a may be either the same as the resin used for the second intermediate layer 104b or different one therefrom. Since this point has been described already, explanation will be omitted herein.

When the second intermediate layer 104b provided with the groove serving as the recording track on the surface is formed by use of the resin having the elastic modulus at 150˚C equal to or above 300 MPa, deformation of the groove which is considered attributable to an exothermic reaction of the dye is suppressed at the time of recording information on the second recording layer 105 by use of the laser beam 110. Accordingly, it is possible to improve the recording characteristic. It is to be noted, however, that the elastic modulus at 150˚C of the resin used for the second intermediate layer 104b is usually equal to or below 2500 MPa from the viewpoint of productivity.

The reason for the improvement in the recording characteristic of the second recording layer 105 by forming the second intermediate layer 104b by use of the resin having an elastic modulus at 150˚C equal to or above 300 MPa is conceived as follows. Specifically, in the field of optical disks, ultraviolet curing resin having an elastic modulus at 150˚C around 200 MPa, for example, has been conventionally used. When an intermediate layer is formed between recording layers respectively containing a dye by use of the above-mentioned resin, having a relatively low elastic modulus at such a high temperature (150˚C), and provided with a groove shape formed on the intermediate layer, turned out to be deformable by heat generation associated with a chemical reaction of the dye included in the recording layer at the time of recording on the second recording layer. As a consequence, the recording characteristic of the second recording layer is apt to be degraded.

On the contrary, among the intermediate layers provided between the recording layers containing the dye, when the second intermediate layer 104b provided with the groove serving as the recording track on the surface is formed by use of the resin having the elastic modulus at 150˚C equal to or above 300 MPa, the groove serving as the recording track formed on the surface on the second recording layer side acquires sufficient strength. For this reason, deformation of the groove considered to be attributable to the exothermic reaction of the dye is suppressed when recording the information on the second recording layer.

In the optical recording medium 100 to which this embodiment is applied, the shrinkage ratio of the resin used for the second intermediate layer 104b provided with the groove serving as the recording track on the surface thereof is set usually equal to or above 6%, preferably equal to or above 9%, more preferably equal to or above 9.5%, or even more preferably equal to or above 10%. However, the shrinkage ratio is usually set equal to or below 20%. Here, the shrinkage ratio means a shrinkage ratio which is measured in accordance with the specific gravity method. Alternatively, it is also possible to measure the shrinkage ratio in accordance with JIS K7112 and the like.

The following advantage is exhibited by forming the second intermediate layer 104b by use of the resin having the shrinkage ratio equal to or above 6%. Specifically, a peeling property of a resin stamper becomes favorable when forming the second intermediate layer 104b by use of the resin stamper as will be described later. A conceivable reason why the peeling property of the resin stamper becomes favorable may be that a slight strain or clearance is caused by contraction of the resin filled in a groove of the resin stamper at the time of curing, for example.

In the optical recording medium 100 to which this embodiment is applied, the elastic modulus at 30˚C of the resin used for the first intermediate layer 104a is set usually equal to or below 1500 MPa, preferably equal to or below 1300 MPa, more preferably equal to or below 700 MPa, even more preferably equal to or below 680 MPa, or particularly preferably equal to or below 650 MPa. Meanwhile, from a practical perspective, the elastic modulus at 30˚C of the resin used for the first intermediate layer 104a is equal to or above 40 MPa.

In the meantime, the shrinkage ratio of the resin used for the first intermediate layers 104a is normally set equal to or below 4%, preferably equal to or below 3.5%, or more preferably equal to or below 3%. However, the shrinkage ratio is ideally equal to 0%.

When the elastic modulus of the resin constituting the first intermediate layer 104a is equal to or below 1500 MPa or when the shrinkage ratio thereof is equal to or below 4%, it is possible to effectively suppress warpage of the first substrate 101 provided with the groove formed on the surface thereof.

Meanwhile, a ratio between the elastic modulus at 30˚C of the first intermediate layer 104a (Ra) and the elastic modulus at 30˚C of the second intermediate layer 104b (Rb) is usually set to (Ra/Rb) $\leq$ (2/3), preferably to (Ra/Rb) $\leq$ (1/2), or more preferably to (Ra/Rb) $\leq$ (1/3). In the meantime, a lower limit of (Ra/Rb) is usually around 0.01.

Here, the elastic moduli of the intermediate layers can be changed by appropriately adjusting the compositions contained in the resin, degrees of crystallinity as well as degrees of cross-linkage of the resin, and the like.

In the optical recording medium 100 to which this embodiment is applied, the total thickness of the first intermediate layer 104a and the second intermediate layer 104b is set usually equal to or above 5 $\mu$m, or more preferably equal to or above 10 $\mu$m. However, it is preferable to set the total thickness of the first intermediate layer 104a and the second intermediate layer 104b equal to or below 100 $\mu$m.

Further, a ratio between the thickness of the first intermediate layer 104a (Da) and the thickness of the second intermediate layer 104b (Db) is usually set to Da/Db = (1/4) to (4/1), preferably to Da/Db = (1/3) to (3/1), or more preferably to Da/Db = (1/2) to (2/1). By setting the ratio between the thickness of the first intermediate layer 104a (Da) and the thickness of the second intermediate layer 104b (Db) within this range, it is possible to suppress the warpage of the first substrate 101 effectively and thereby to improve the recording characteristic of the recording layer.

Next, concrete examples of the materials constituting the first intermediate layer 104a or the second intermediate layer 104b will be described.

The second intermediate layer 104b constitutes the outermost resin layer. Accordingly, it is preferable to form the second intermediate layer 104b by use of a material capable of suppressing deformation of the groove formed on the second intermediate layer 104b at the time of recording on the second recording layer 105. To be more specific, it is preferable to form the second intermediate layer 104b by use of resin having a high elastic modulus at a high temperature and/or having a relatively large shrinkage ratio.

On the other hand, the first intermediate layer 104a may apply the same material as that of the second intermediate layer 104b. It is to be noted, however, that the first intermediate layer 104a preferably has a function to reduce the warpage of the first substrate 101. For this reason, as the material used for the first intermediate layer 104a, it is preferable to use resin having a small elastic modulus at 30˚C and/or having a small shrinkage ratio. The concrete materials of the resin having such properties have been described already, and explanation will be omitted herein.

Next, other layers constituting the optical recording medium 100 applying this embodiment will be described.

(First substrate)

The first substrate 101 preferably has excellence in the optical characteristic such as optical transmittance and small birefringence. Moreover, the first substrate 101 preferably has excellence in formability such as ease of injection molding. Further, the first substrate 101 preferably has small hygroscopicity. In addition, the first substrate 101 preferably includes shape stability so as to impart certain rigidity to the optical recording medium 100. The materials constituting the first substrate 101 is not particularly limited. For example, the material includes acrylic resin, methacrylic resin, polycarbonate resin, polyolefin resin (amorphous polyolefin, in particular), polyester resin, polystyrene resin, epoxy resin, glass, and the like. Moreover, it is also possible to use one configured to provide a resin layer made of radiation curing resin such as photo-curing resin on a base made of glass or the like. Among them, polycarbonate is preferred in light of the optical characteristic, high productivity as represented by formability, costs, low hygroscopicity, shape stability, and the like. Meanwhile, amorphous polyolefin is preferred in light of chemical resistance and low hygroscopicity and the like. Meanwhile, a glass substrate is preferred in light of fast response.

The thickness of the first substrate 101 is set usually equal to or below 2 mm or preferably equal to or below 1 mm. Coma aberration tends to be smaller as a distance between an objective lens and the recording layer is smaller or as the substrate is thinner. Accordingly, it is easier to increase the recording density. It is to be noted, however, that the thickness of the first substrate 101 is set usually equal to or above 10 $\mu$m or preferably equal to or above 30 $\mu$m in order to obtain sufficiently the optical characteristic, hygroscopicity, formability, and shape stability.

(First recording layer)

The first recording layer 102 usually has the same degree of sensitivity as that of a recording layer used for a single-sided recording medium such as a CD-R, a DVD-R or a DVD+R. Dyes used for the first recording layer 102 are preferably dye components, which have a maximum absorption wavelength $\lambda$ max in the range of visible light and near infrared light around 350 nm to 900 nm and are suitable for recording by use of a blue to near microwave laser. Among them, it is preferable to apply dyes suitable for recording with a near infrared laser having a wavelength in a range from about 770 nm to 830 nm (such as 780 nm or 830 nm) normally used for a CD-R, a red laser having a wavelength in a range from about 620 nm to 690 nm (such as 635 nm, 650 nm or 680 nm) normally used for a DVD-R, or a so-called blue laser having a wavelength of 410 nm, of 515 nm or the like, for example.

Although the dyes used for the first recording layer 102 are not particularly limited, organic dye materials are normally used. The organic dye materials, for instance, include macrocyclic azaannulene dyes (such as phthalocyanine dyes, naphthalocyanine dyes or porphyrin dyes), pyrromethene dyes, polymethine dyes (such as cyanine dye, merocyanine dyes or squalirium dyes), anthoraquinone dyes, azulenium dyes, metal complex azo dyes, metal complex indoaniline dyes, and the like. Among them, the metal complex azo dyes are preferred in light of excellent recording sensitivity, and excellence in durability as well as light resistance. These dyes may be used either singly or in combination of two or more types.

The first recording layer 102 may also contain a transition metal chelate compound (such as acetylacetonato chelate, bisphenyldithiol, salicylaldehyde oxime or bisdithio-$\alpha$-diketone) as a singlet oxygen quencher in order to stabilize the recording layer and to improve the light resistance. Meanwhile, the first recording layer 102 may contain a recording sensitivity improving agent such as a metal compound in order to improve the recording sensitivity. Here, the metal compound is a compound containing metal such as transition metal in the form of atom, ion, cluster or the like. The metal compounds include organiometallic compounds such as ethylenediamine complexes, azomethine complexes, phenylhydroxyamine complexes, phenanthroline complexes, dihydroxyazobenzene complexes, dioxime complexes, nitrosoaminophenol complexes, pyridyltriazine complexes, acetylacetonato complexes, metallocene complexes, porphyrin complexes, and the like. Although metal atoms are not particularly limited, transition metal is preferred.

Further, the first recording layer 102 may also combine a binder, a leveling agent, an antifoaming agent, and the like as appropriate. Preferred binders include polyvinyl alcohol, polyvinylpyrrolidone, nitrocellulose, cellulose acetate, ketone resin, acrylic resin, polystyrene resin, urethane resin, polyvinylbutyral, polycarbonate, polyolefin, and the like.

The thickness of the first recording layer 102 is not particularly limited because a suitable thickness varies depending on the recording method and the like. To obtain a sufficient degree of modulation, the thickness of the first recording layer 102 is set usually equal to or above 5 nm, preferably equal to or above 10 nm, or particularly preferably equal to or above 20 nm. However, because of the need of optical transmission, the thickness of the first recording layer 102 is set usually equal to or below 3 $\mu$m, preferably equal to or below 1 $\mu$m, or more preferably equal to or below 200 nm.

The method of forming the first recording layer 102 is not particularly limited. Usually, it is possible to cite generally practiced thin film forming methods including the vacuum vapor deposition method, the sputtering method, the doctor blade method, the casting method, the spin coating method, the dipping method, and the like. Wet film forming methods such as the spin coating method are preferred in light of mass production capability and of costs. Meanwhile, the vacuum vapor deposition method is preferred because it is possible to obtain a uniform recording layer.

In the case of film forming in accordance with the spin coating method, the revolutions are preferably set in a range from 10 rpm to 15000. rpm. Moreover, usually, a heat treatment is generally performed after spin coating to remove a solvent. A coating solvent in the case of forming the recording layer in accordance with a coating method such as the doctor blade method, the casting method, the spin coating method or the dipping method is not particularly limited as long as the solvent does not corrode the substrate. For example, the solvents include: ketone alcohol solvents such as diacetone alcohol or 3-hydroxy-3-methyl-2-butanone; cellosolve solvents such as methylcellosolve or ethylcellosolve; chain hydrocarbon solvents such as n-hexane or n-octane; cyclic hydrocarbon solvents such as cyclohexane, methylcyclohexane, ethylcyclohexane, dimethylcyclohexane, n-butylcyclohexane, tert-butylcyclohexane or cyclooctane; perfluoroalkyl alcohol solvents such as tetrafluoropropanol, octafluoropentanol or hexafluorobutanol; hydroxycarbonic acid ester solvents such as methyl lactate, ethyl lactate or methyl 2-hydroxyisobutyrate; and the like.

The heat treatment for removing these solvents is usually conducted at a temperature slightly lower than the boiling point of an applied solvent in light of removing the solvent and carrying out the treatment with simple equipment. The heat treatment is usually conducted in a temperature range from 60°C to 100°C. Moreover, the method of the heat treatment is not particularly limited. For example, it is possible to cite a method of coating a solution containing the dye for film formation in order to form the first recording layer 102 on the first substrate 101 and maintaining at a predetermined temperature for a predetermined time period (usually equal to or longer than 5 minutes, or preferably equal to or longer than 10 minutes but usually equal to or shorter than 30 minutes, or preferably equal to or shorter than 20 minutes). Alternatively, a method of heating the first substrate 101 by irradiating infrared rays or far infrared rays for a short time period (such as five seconds to 5 minutes) is also applicable.

In the case of the vacuum vapor deposition method, the recording layer is formed as described below, for example. Specifically, the components of the recording layer including the organic dye and various additives, as appropriate, are put into a crucible disposed inside a vacuum chamber. Then, the inside of the vacuum chamber is evacuated to a range from $10^{-2}$ Pa to $10^{-5}$ Pa with an appropriate vacuum pump. Thereafter, the components of the recording layer are evaporated by heating the crucible so as to deposit the components on the substrate placed opposite to the crucible.

(First reflective layer)

The first reflective layer 103 preferably has low absorption of recording and reproducing light. The first reflective layer 103 is required to have optical transmittance usually equal to or above 40% and adequate optical reflectivity usually equal to or above 30%. For example, it is possible to impart adequate optical transmittance by providing highly reflective metal in a thin profile. Meanwhile, the first reflective layer 103 preferably has a certain degree of corrosion resistance. Moreover, the first reflective layer preferably has a shielding property so as to prevent an influence to the first recording layer 102 attributable to effusion of other components from the layer above the first reflective layer 103 (which is the intermediate layer 104 in this case).

The thickness of the first reflective layer 103 is set usually equal to or below 50 nm, preferably equal to or below 30 nm, or more preferably equal to or below 25 nm in order to achieve the optical transmittance equal to or above 40%. However, in order to prevent an influence to the first recording layer 102 by the layer above the first reflective layer 103, the thickness of the first reflective layer 103 is usually set equal to or above 3 nm, preferably equal to or above 5 nm.

Materials constituting the first reflective layer 103 are not particularly limited. However, a substance having moderately high reflectivity relative to a wavelength of reproducing light is preferred. As the materials constituting the first reflective layer 103, it is possible to use metal and semimetal including Au, Al, Ag, Cu, Ti, Cr, Ni, Pt, Ta, Pd, Mg, Se, Hf, V, Nb, Ru, W, Mn, Re, Fe, Co, Rh, Ir, Zn, Cd, Ga, In, Si, Ge, Te, Pb, Po, Sn, Bi, and rare earth metals either singly or in the form of an alloy. Among them, Au, Al, and Ag are suitable for the material of the first reflective layer 103 due to high reflectivity. In particular, a metallic material containing Ag in an amount equal to or above 50% is preferred in light of low costs and high reflectivity.

The first reflective layer 103 has a small thickness so that large crystal grains in the film may cause reading noises. Accordingly, it is preferable to use a material having small crystal grains. Pure silver tends to have large crystal grains. Therefore, it is preferable to use Ag in the form of an alloy. Above all, such an alloy preferably includes Ag as a main component and contains 0.1 atom% to 15 atom% of at least one element selected from the group consisting of Ti, Zn, Cu, Pd, Au, and rare earth metals. When the alloy contains two or more elements out of Ti, Zn, Cu, Pd, Au, and rare earth metals, the content of each atom may be set in the range from 0.1 atom% to 15 atom%. When the alloy contains two or more elements out of Ti, Zn, Cu, Pd, Au, and rare earth metals, the total contents thereof are preferably set in the range from 0.1 atom% to 15 atom%.

A particularly preferable alloy composition is one that includes Ag as a main component and contains 0.1 atom% to 15 atom% of at least one element selected from the group consisting of Ti, Zn, Cu, Pd, Au, and 0.1 atom% to 15 atom% of at least one of rare earth elements as appropriate. Among rare earth metals, neodymium is particularly preferred. To be more specific, AgPdCu, AgCuAu, AgCuAuNd, AgCuNd, or the like is preferred.

A layer solely made of Au is suitable for the first reflective layer 103 because of small crystal grains and excellent corrosion resistance. Meanwhile, it is also possible to use a layer made of Si as the first reflective layer 103. In addition, it is also possible to form a multilayer film by alternately stacking low refractive index thin films and high refractive index thin films by use of non-metallic materials and to use the multilayer film as the reflective layer.

The method of forming the first reflective layer 103, for instance, includes the sputtering method, the ion plating method, the chemical vapor deposition method, the vacuum vapor deposition method, and the like. Moreover, it is also possible to provide an intermediate layer or an adhesive layer made of a publicly known inorganic or organic material in a space between the first substrate 101 and the first recording layer 102 or in a space between the first recording layer 102 and the first reflective layer 103 for the purpose of enhancing the reflectivity, improving the recording characteristic, enhancing adhesion or the like.

(Second recording layer)

The second recording layer 105 is subjected to recording by the power reduced about to the half as compared to the power of the incident laser beam 110 owing to presence of the first recording layer 102, the first reflective layer 103, and so forth. For this reason, usually, it is preferable to use a dye having higher sensitivity for the recording layer 105 than that for a recording layer used for a single-sided recording medium such as a CD-R, a DVD-R or a DVD+R. Moreover, in order to achieve favorable recording and reproducing characteristics, it is desirable to use a dye having low heat generation and high refractive index. In addition, it is desirable to set degrees of reflection and absorption of light in an appropriate range in a combination of the second recording layer 105 and the second reflective layer 106.

The materials constituting the second recording layer 105, the film forming methods thereof, the solvents used for film formation thereof, and the like are described as similar to those applicable to the first recording layer 102. As the film forming methods, wet film forming methods are preferred. A suitable thickness of the second recording layer 105 varies depending on the recording method and the like. However, in order to widen the power margin of the second recording layer 105, it is preferable to render the thickness of the second recording layer 105 as thin as possible within an appropriate range so as not to affect the recording characteristic of the second recording layer 105 or productivity thereof. By rendering the thickness of the second recording layer 105 as thin as possible, it is possible to reduce heat generation of the second recording layer 105 at the time of recording. As a result, it is easier to increase the thermal radiation property of the second recording layer 105 and it is therefore possible to suppress deformation of the groove formed on the second intermediate layer 104b. Moreover, it is possible to widen the power margin of the second recording layer 105.

From the above-mentioned points of view (such as the viewpoint of ensuring appropriate reflectivity and the thermal radiation property), the thickness of the second recording layer 105 is set usually equal to or below 3 $\mu$m, preferably equal to or below 1 $\mu$m, or more preferably equal to or below 200 nm. Meanwhile, the thickness of the second recording layer 105 is set usually equal to or above 10 nm, preferably equal to or above 30 nm, or particularly preferably equal to or above 50 nm.

The first recording layer 102 and the second recording layer 105 may apply the same material or different materials.

(Second reflective layer)

It is desirable that the second reflective layer 106 have high reflectivity and high durability. To ensure high reflectivity, the thickness of the second reflective layer 106 is set usually equal to or above 20 nm, preferably equal to or above 30 nm, or more preferably equal to or above 50 nm. However, in order to reduce takt time in production thereof and to reduce costs, the second reflective layer 106 is set usually equal to or below 400 nm or preferably equal to or below 300 nm.

In order to ensure the thermal radiation property of the second recording layer 105 and to widen the power margin of the second recording layer 105, it is preferable that the second reflective layer 106 satisfy the following relation with the first reflective layer 103.

To be more specific, in order to ensure the thermal radiation property of the second recording layer 105 and to widen the power margin of the second recording layer 105, it is preferable that the second reflective layer 106 satisfy the following relation with the first reflective layer 103. Specifically, (the thickness of the second reflective layer 106) / (the thickness of the first reflective layer 103) is set preferably equal to or above 2, more preferably equal to or above 3, or particularly preferably equal to or above 5. Meanwhile, in light of the recording characteristics other than the power margin, such as balances in terms of reflectivity and sensitivity between the first recording layer 102 and the second recording layer 105, (the thickness of the second reflective layer 106) / (the thickness of the first reflective layer 103) is set preferably equal to or below 20, more preferably equal to or below 15, or even more preferably equal to or below 10. By setting the value within the above-described range, to widen the power margin of the second recording layer 105 becomes easier than to widen the power margin of the first recording layer 102.

Materials constituting the second reflective layer 106 preferably has sufficiently high reflectivity relative to the wavelength of reproducing light. For example, it is possible to use metal and semimetal including Au, Al, Ag, Cu, Ti, Cr, Ni, Pt, Ta, and Pd either singly or in the form of an alloy. Among them, Au, Al, and Ag are suitable for the material of the second reflective layer 106 due to high reflectivity thereof. Moreover, in addition to these metal elements as the main component, the second reflective layer 106 may contain other components. Examples of the applicable components include metal and semimetal such as Mg, Se, Hf, V, Nb, Ru, W, Mn, Re, Fe, Co, Rh, Ir, Cu, Zn, Cd, Ga, In, Si, Ge, Te, Pb, Po, Sn, Bi, and rare earth metals.

Among these materials, one containing Ag as the main component is preferred, and it is preferable to use Ag in the form of an alloy. Such an alloy including Ag as the main component preferably contains 0.1 atom% to 15 atom% of at least one element selected from the group consisting of Ti, Zn, Cu, Pd, Au, and rare earth metals. When the alloy contains two or more elements out of Ti, Zn, Cu, Pd, Au, and rare earth metals, a content of each element is preferably set in a range from 0.1 atom% to 15 atom%, or the total contents thereof are preferably set in a range from 0.1 atom% to 15 atom%.

A particularly preferable alloy composition is one that includes Ag as the main component and contains 0.1 atom% to 15 atom% of at least one element selected from the group consisting of Ti, Zn, Cu, Pd, Au, and 0.1 atom% to 15 atom% of at least one of rare earth metals as appropriate. Among rare earth metals, neodymium is particularly preferred. To be more specific, AgPdCu, AgCuAu, AgCuAuNd, AgCuNd, or the like is preferred.

A layer made solely of Au is suitable for the second reflective layer 106 because of high durability (high corrosion resistance). It is also possible to form a multilayer film by alternately stacking low refractive index thin films and high refractive index thin films by use of non-metallic materials and to use the multilayer film as the second reflective layer 106. The method of forming the second reflective layer 106, for instance, includes the sputtering method, the ion plating method, the chemical vapor deposition method, the vacuum vapor deposition method, and the like. Moreover, it is also possible to provide an intermediate layer or an adhesive layer made of a publicly known inorganic or organic material above or below the second reflective layer 106 for the purpose of enhancing the reflectivity, improving the recording characteristic, enhancing adhesion or the like.

(Adhesive layer)

The adhesive layer 107 having a high adhesion force and a low shrinkage ratio at the time of hardening and adhesion is preferred in light of shape stability of the medium. Moreover, it is desirable to form the adhesive layer 107 by use of a material not damaging the second reflective layer 106. However, it is also possible to provide a protective layer made of a publicly known inorganic or organic material between the both layers in order to suppress damages. The thickness of the adhesive layer 107 is set usually equal to or above 2 $\mu$m or preferably equal or above 5 $\mu$m. Nevertheless, in order to render the optical recording medium as thin as possible and due to problems such as reduction in productivity due to time consumption for hardening, the thickness of the adhesive layer 107 is set usually equal to or below 100 $\mu$m. The materials similar to those used for the intermediate layer 104 can be used as the materials of the adhesive layer 107. In addition, a pressure-sensitive two-sided tape and the like are also applicable. It is possible to form the adhesive layer 107 by interposing the pressure-sensitive two-sided tape between the second reflective layer 106 and the second substrate 108 and then applying pressure.

(Second substrate)

It is preferable that the second substrate 108 have high mechanical stability and high rigidity. Moreover, it is preferable that the second substrate 108 exhibit high adhesion to the adhesive layer 107. As the material having the above-mentioned features, it is possible to use the material applicable to the first substrate 101. In addition, Al alloy substrates including Al as a main component such as an Al-Mg alloy, Mg alloy substrates including Mg as a main component such as an Mg-Zn alloy, substrates made of any one of silicon, titanium, and ceramics, and substrates formed in combination of these substrates are applicable.

Here, polycarbonate is preferred in light of high productivity as represented by formability, costs, low hygroscopicity, shape stability, and the like. Meanwhile, amorphous polyolefin is preferred in light of chemical resistance and low hygroscopicity. Meanwhile, a glass substrate is preferred in light of fast response. It is preferable to provide the second substrate 108 with a certain thickness in order to impart sufficient rigidity to the optical recording medium 100. To be more specific, the thickness is set preferably equal to or above 0.3 mm. However, the thickness is set usually equal to or below 3 mm or preferably equal to or below 1.5 mm.

(Other layers)

In the optical recording medium 100 having the above-described laminated structure, it is also possible to interpose other arbitrary layers as appropriate. Alternatively, it is also possible to provide other arbitrary layers on the outermost surfaces of the medium. To be more spedific, it is possible to provide a buffer layer in a space between the first reflective layer 103 and the intermediate layer 104, a space between the intermediate layer 104 and the second recording layer 105, a space between the second reflective layer 106 and the adhesive layer 107 or the like. The thickness of the buffer layer is set preferably equal to or above 2 nm or more preferably equal to or above 5 nm. If the thickness of the buffer layer is excessively thin, there is a risk of insufficient prevention of the above-described mixture phenomenon.

However, the thickness of the buffer layer is set preferably equal to or below 2000 nm or more preferably equal to or below 500 nm. If the buffer layer is excessively thick, such a thickness is not only redundant for prevention of the mixture but also bears a risk of reduction in optical transmittance. Meanwhile, in the case of a layer made of an inorganic substance, there is a risk of reduction in productivity due to time consumption for film forming or an increase in film stress. For this reason, the thickness of the buffer layer is set preferably equal to or below 200 nm. Particularly, optical transmittance is excessively reduced in the case of metal. Therefore, it is preferable to set the thickness of the buffer layer approximately equal to or below 20 nm.

Meanwhile, it is also possible to provide a protective layer in order to protect the recording layer or the reflective layer. Materials of the protective layer are not particularly limited as long as the materials are capable of protecting the recording layer or the reflective layer against an external force. As for organic materials, it is possible to cite thermoplastic resin, thermosetting resin, electron beam curable resin, ultraviolet curing resin, and the like. Meanwhile, as for inorganic materials, it is possible to cite dielectric substances such as silicon oxide, silicon nitride, $MgF_2$ or $SnO_2$.

(V) Method of manufacturing optical recording medium

A concrete example of a method of manufacturing the above-described optical recording medium configured to widen the power margin of the second recording layer as compared to the power margin of the first recording layer will be described below.

In a concrete method of manufacturing the optical recording medium, the intermediate layer is formed by sequentially laminating multiple resin layers, for example. Then, the resin satisfying at least one of the following conditions (1) to (3) is used for the resin layer to be finally formed. Thereafter, the given groove serving as the recording track is formed on a surface of the resin layer to be formed in the last place.

(1) The resin layer to be formed in the last place applies resin having a different elastic modulus from those of other layers constituting the intermediate layer.
(2) The elastic modulus at 150˚C of the resin used for the resin layer to be formed in the last place is set equal to or above 300 MPa.
(3) When forming the second recording layer by use of a substrate and resin, the elastic modulus at 150˚C of the resin used for the resin layer to be formed in the last place is set higher than the elastic modulus at 150˚C of the resin constituting the substrate.

Here, when forming the intermediate layer by sequentially laminating the multiple resin layers, the resin layers are preferably made of ultraviolet curing resin in light of production efficiency. While a film of the resin layers constituting the intermediate layer are sequentially formed, and the resin layer to be formed in the last place is made of ultraviolet curing resin which satisfies at least one of the following conditions (1) to (3).

(1) The ultraviolet curing resin having a different elastic modulus from those of other layers is applied.
(2) The elastic modulus at 150˚C of the ultraviolet curing resin used for the resin layer to be formed in the last place is set equal to or above 300 MPa.
(3) The elastic modulus at 150˚C of the ultraviolet curing resin used for the resin layer to be formed in the last place is set higher than the elastic modulus at 150˚C of the ultraviolet curing resin constituting the substrate.

Moreover, a transparent stamper (to be described later in detail) is pressed against the surface of this resin layer to be formed in the last place. Thereafter, ultraviolet rays are irradiated from the transparent stamper side to cure the ultraviolet curing resin constituting the respective resin layers. After curing, the predetermined groove serving as the recording track is formed on the outermost resin layer by peeling the transparent stamper off.

Meanwhile, in the optical recording medium configured to widen the power margin of the second recording layer as compared to the power margin of the first recording layer, the recording layers preferably contain the organic dyes, because the effect of the present invention will be prominently exhibited by use of the recording layers containing the organic dyes as described previously.

Now, a favorable example of the method of manufacturing the optical recording medium applying the present invention (an example of the intermediate layer applying the two-layer structure) will be described.

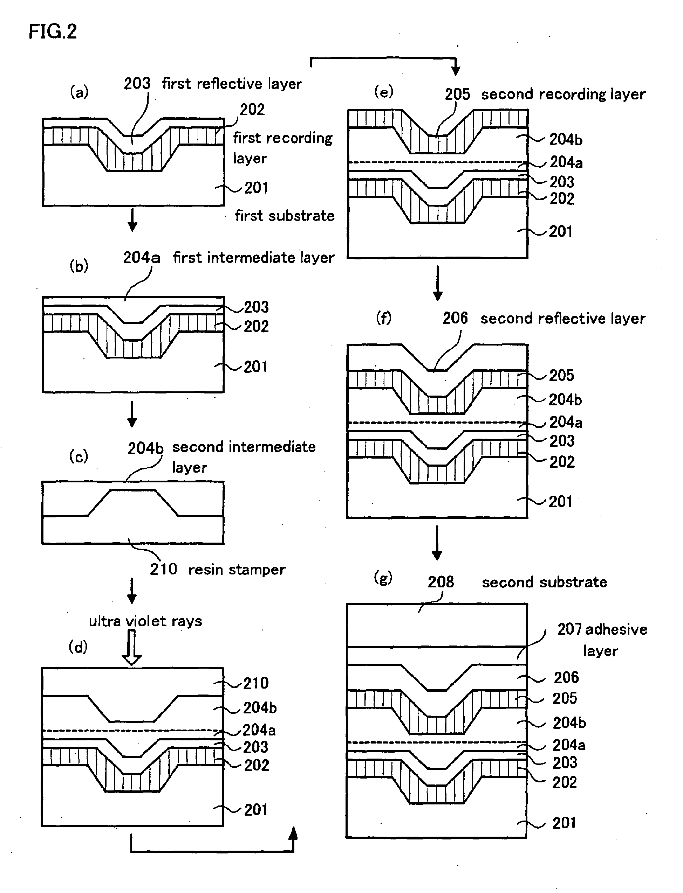

Figs. 2(a) to 2(g) are schematic drawings for explaining the method of manufacturing the optical recording medium applying this embodiment. First, as shown in Fig. 2(a), a first substrate 201 provided with a groove and a land, and a groove and a prepit, formed on a surface thereof is fabricated by use of the stamper in accordance with the injection molding method or the like. Next, the coating solution prepared by dissolving the organic dye into the solvent is coated on the surface of the first substrate 201 provided with concavities and convexities by spin coating or the like. Then, a drying process is carried out if necessary. In this way, a film of a first recording layer 202 is formed. After forming the film of the first recording layer 202, a film of a translucent first reflective layer 203 is formed on the first recording layer 202 by sputtering or depositing the Ag alloy or the like.

Subsequently, as shown in Fig. 2(b), a first intermediate layer 204a is formed by coating an ultraviolet curing resin layer on the entire surface of the first reflective layer 203 by spin coating or the like. Meanwhile, as shown in Fig. 2(c), predetermined ultraviolet curing resin is dropped in a round shape onto a surface of an optically transparent resin stamper 210 provided with a guide groove, and a second intermediate layer 204b (this second intermediate layer 204b constitutes the outermost resin layer) is formed in accordance with the spinner method. Next, as shown in Fig. 2(d), the first substrate 201 is attached to the resin stamper 210 so as to allow the first intermediate layer 204a to face the second intermediate layer 204b. Subsequently, the first intermediate layer 204a and the second intermediate layer 204b are cured and adhered by irradiating ultraviolet rays from the resin stamper 210 side. Then, after sufficient curing, the resin stamper 210 is peeled off to form the intermediate layer in which the first intermediate layer 204a and the second intermediate layer 204b are laminated. At this time, the guide groove formed on the resin stamper 210 is transferred to the surface of the second intermediate layer 204b.

Subsequently, as shown in Fig. 2(e), the coating solution prepared by dissolving the organic dye into the solvent is coated on the surface of the second intermediate layer 204b by spin coating or the like. Then, a heating process is carried out to remove the solvent used in the coating solution when appropriate. In this way, a second recording layer 205 is formed.

Next, as shown in Fig. 2(f), a film of a second reflective layer 206 is formed on the second recording layer 205 by sputtering or depositing the Ag alloy or the like. Thereafter, as shown in Fig. 2(g), a mirror substrate as a second substrate 208, which is a dummy substrate obtained by subjecting polycarbonate to injection molding, is attached to the second reflective layer 206 by use of an adhesive layer 207 to complete manufacturing of the optical recording medium. Here, the second intermediate layer 204b may be directly formed on the first intermediate layer 204a instead of forming on the resin stamper 210 as described above.

In the case of the intermediate layer including three or more layers, the following process may be carried out, for example. Specifically, in Fig. 2(b), the intermediate layer may be formed by coating one or more than one type of ultraviolet curing resin (not shown in drawings) having desired performances on the first intermediate layer 204a sequentially by spin coating. In this case, the coating order of the of ultraviolet curing resin having the desired performances (the ultraviolet curing resin functions as the resin layers after curing) may be determined in consideration of the performances required by the intermediate layer. Since this point has been described already, explanation will be omitted herein.

The optical recording medium applying this embodiment and the manufacturing method thereof have been described above. However, this embodiment will not be limited only to the above-described aspects and various modifications are possible. For example, it is possible to provide other layers between the respective layers or as an outermost layer when appropriate.

Examples

Now, this embodiment will be described further in detail based on examples. It is to be noted, however, that this embodiment is not limited only to the following examples unless exceeding the scope thereof.

(1) Preparation of optical recording medium

Polycarbonate (having an elastic modulus at 150°C equal to 950 MPa and an elastic modulus at 30°C equal to 2300 MPa) is subjected to injection molding by use of a nickel stamper, whereby a substrate having a diameter of 120 mm, a thickness of 0.57 mm, and formation of grooves at a pitch of 0.74 $\mu$m, a width of 0.33 $\mu$m, a depth of 160 nm were obtained.

Meanwhile, an optically transparent stamper of a disk shape having an outside diameter of 120 mm, a thickness of 0.6 mm, and including a center hole having an inside diameter of 15 mm was formed by use of amorphous polyolefin as a raw material in accordance with the injection molding method. Upon injection molding, a nickel mother plate including guide grooves with a track pitch of 0.74 $\mu$m, with a width of 0.32 $\mu$m, and with a depth of 175 nm was used. Here, by use of an atomic force microscope (AFM), it was confirmed that the guide grooves on the nickel mother plate were accurately replicated to the optically transparent stamper.

Next, a tetrafluoropentanol solution of a metal-containing azo dye (at a concentration of 2 wt%) was prepared, and then dropped on the substrate and coated in accordance with the spinner method. After coating, a first recording layer was formed by drying at 70°C for 30 minutes. Moreover, a film of a translucent first reflective layer having a thickness of 17 nm was formed on the first recording layer in accordance with the sputtering method by use of an Ag alloy made of Ag-Bi (Bi: 1.0 atom%).

Next, predetermined ultraviolet curing resin 1 for forming a first intermediate layer (a first resin layer) was dropped in a round shape on the first reflective layer, and a film having a thickness of about 25 $\mu$m was formed in

accordance with the spinner method. Meanwhile, predetermined ultraviolet curing resin 2 for forming a second intermediate layer (a second resin layer, an outermost resin layer) was dropped in a round shape on a surface including formation of the guide grooves of the optically transparent stamper prepared in advance, and a film having a thickness of about 25 $\mu$m was formed in accordance with the spinner method. Next, the first substrate was attached to the optically transparent stamper so as to allow the film made of the ultraviolet curing resin 1 to face the film made of the ultraviolet curing resin 2. Subsequently, ultraviolet rays were irradiated from the optically transparent stamper side, thereby curing and attaching the ultraviolet curing resin 1 and ultraviolet curing resin 2 together. Thereafter, the optically transparent stamper was peeled off and an intermediate layer having a thickness of about 50 $\mu$m was formed, in which the first intermediate layer and the second intermediate layer were laminated. Here, it was confirmed, by use of the AFM, that the guide grooves formed on the optically transparent stamper were transferred to the surface of the second intermediate layer.

Next, the tetrafluoropentanol solution of the metal-containing azo dye (at the concentration of 2 wt%) was dropped on the second intermediate layer and coated in accordance with the spinner method. After coating, a second recording layer was formed by drying at 70°C for 30 minutes. Subsequently, a second reflective layer having a thickness of 120 nm was formed in accordance with the sputtering method by use of the Ag alloy made of Ag-Bi (Bi: 1.0 atom%). Further, an adhesive layer was provided on the second reflective layer by spin-coating ultraviolet curing resin. Then, a polycarbonate substrate having a diameter of 120 mm and a thickness of 0.6 mm was placed on this adhesive layer to form a second substrate, and was cured and attached by irradiating ultraviolet rays. In this way, a multilayer optical recording medium including two recording layers was prepared.

(2) Measurement of jitter of optical recording medium

A recording and reading tester having a numerical aperture of 0.65 was used to irradiate a laser beam having a wavelength of 657 nm from the first substrate side onto the second recording layer of the optical recording medium including the two recording layers, which was prepared in advance, and then 8-16 modulation EFM+ signals were recorded under conditions of a recording speed at 9.1 m/s and a reference clock cycle of 16 ns while changing recording power. Next, the recorded signals were reproduced under conditions of a reproducing linear velocity at 3.8 m/s and reproducing power at 0.7 mW to measure jitter (unit: %).
Here, the jitter was measured in the situation where recorded marks also existed on the recording tracks on both adjacent sides of the recording track targeted for the jitter measurement. That is, the jitter herein represents multi-track jitter.
The jitter is a value which is obtained as described below. Specifically, a read signal is allowed to pass through an equalizer and an LPF, and is then converted into a binary signal using a slicer. Thereafter, a standard deviation (the jitter) of time lag of a leading edge as well as a trailing edge of this binary signal relative to a PLL clock is measured with a time interval analyzer. Moreover, the measured value is normalized by use of a reference clock cycle T to define the jitter. A recording characteristic of an optical recording medium is deemed to be fine if the jitter is equal to or below 9%.

(3) Measurement of tilt

A tilt measurement device (Argus: manufactured by Dr. Schwab Inspection Technology GmbH) was used to irradiate parallel light onto the optical recording medium and to measure a tilt by use of an angle between reflected light and incident light (unit: deg). A smaller value represents less deflection of the substrate of the optical recording medium.

(4) Measurement of Push-Pull signal of optical recording medium

A Push-Pull signal obtained from the second recording layer of the optical recording medium including the two recording layers prepared in advance was measured. A larger value represents a better recording characteristic. Here, the Push-Pull signal is defined by the following equation.

### (Equation 1)

$$(Push - Pull) = \frac{(I_1 - I_2)_{PP}}{\left| (I_1 + I_2)_{max} + (I_1 + I_2)_{min} \right| / 2}$$

In the equation, $(I_1-I_2)_{pp}$ denotes peak-to-peak amplitude of an $(I_1-I_2)$ signal, $(I_1+I_2)_{max}$ denotes a maximum value of an $(I_1+I_2)$ signal, and $(I_1+I_2)_{min}$ denotes a minimum value of the $(I_1+I_2)$ signal. Moreover, when the read signal from the optical recording medium is received by a quadrant photodetector as quadrisected detectors (PD1, PD2, PD3, and PD4), $(I_1)$ represents a sum of outputs from PD1 and PD2 located on the left side relative to a virtual center of the

guide groove ($I_1$= PD1+PD2). Meanwhile, ($I_2$) represents a sum of outputs from PD3 and PD4 located on the right side relative to the virtual center of the guide groove ($I_2$= PD3+PD4).

Here, the optical recording medium is rotated at 3.8 m/s while applying a focus servo to the second recording layer and setting a tracking servo to a state of an open loop. Usually, an optical disk has eccentricity in the order of several tens of micrometers. Accordingly, a reading beam crosses the guide grooves and lands for several tens of time in one revolution. The ($I_1$-$I_2$) signal and the ($I_1$+$I_2$) signal exhibit the outputs in the form of a sinusoidal wave.

(5) Evaluation of peeling property between optically transparent stamper and intermediate layer

A knife edge was inserted from a portion of the center hole of the optically transparent stamper into a portion where the ultraviolet curing resin was not coated. Then, the optically transparent stamper was peeled off from the intermediate layer by applying a force thereto. The surface of the optically transparent stamper after peeling was subjected to visual check under a fluorescent lamp or to observation with an optical microscope, and a peeling property was evaluated based on the following criteria:

○: easily peelable, no residue of ultraviolet curing resin observed on the surface of the optically transparent stamper;
△: relatively easily peelable, residue of ultraviolet curing resin observed on the surface of the optically transparent stamper with the optical microscope; and
×: difficult to peel, or residue of ultraviolet curing resin discerned on the surface of the optically transparent stamper after peeling by a visual check

(6) Elastic modulus and glass transition temperature of resin

A dynamic viscoelasticity measuring instrument (DDV series: manufactured by Rheovibron Ltd.) was used to measure dynamic elastic moduli of the resin at a temperature of 150˚C and at a temperature of 30˚C under conditions of a measurement frequency at 3.5 Hz and a temperature rising rate of 3 ˚C/min (unit: MPa). A glass transition temperature (Tg) of the resin was also measured at the same time.

(7) Shrinkage ratio of resin

A shrinkage ratio of the resin was measured in accordance with a density measurement (unit: %).

(8) Measurement method for power margin

The jitter of the first recording layer and the second recording layer was measured respectively by use of the jitter measuring method (2) described above. Accordingly, recording power factors P1 and P2 achieving the jitter equal to or below 9% were obtained. The power margin was calculated as a value obtained by dividing a recording power width (P2-P1) achieving the jitter less than 9% by a central value (P2+P1)/2 thereof.
To be more specific, recording was performed in a position at a radius of 23 mm in terms of each of the first recording layer and the second recording layer in accordance with the method (2) described above. Thereafter, the factors P1 and P2 achieving the jitter equal to or below 9% were obtained and then the value [(P2-P1)/{(P2+P1)/2}] was calculated.

(Example 1 to Example 4, Comparative Example 1, and Comparative Example 2)

Six types of ultraviolet curing resin(A to F) shown in Table 1 were used. Here, the ultraviolet curing resin materials (A to F) in Table 1 are as follows:

Resin A: radical ultraviolet curing resin, manufactured by Dainippon Ink and Chemicals, Incorporated;
Resin B: radical ultraviolet curing resin, SD694, manufactured by Dainippon Ink and Chemicals, Incorporated;
Resin C: radical ultraviolet curing resin, SD394, manufactured by Dainippon Ink and Chemicals, Incorporated;
Resin D: radical ultraviolet curing resin, SD347, manufactured by Dainippon Ink and Chemicals, Incorporated;
Resin E: cationic ultraviolet curing resin, SD4016, manufactured by Dainippon Ink and Chemicals, Incorporated; and
Resin F: radical ultraviolet curing resin, SD6036, manufactured by Dainippon Ink and Chemicals, Incorporated.

Meanwhile, the shrinkage ratios, the elastic moduli, and the glass transition temperatures of the resin materials A to F are shown in Table 1. Here, in Table 1, data marked with (*1) and (*2) (data on the resin materials E and F indicated in the column of the elastic moduli at 150˚C) represent measurement results of the elastic moduli at 100˚C. The elastic moduli at 150˚C thereof are assumed to be smaller than the data on the elastic moduli at 100˚C thereof.

(Table 1)

|  | Shrinkage ratio (%) | Elastic modulus (MPa) | | Glass transition temperature (˚C) |
|---|---|---|---|---|
|  |  | 30˚C | 150˚C |  |
| Resin A | 11.9 | 3000 | 1050 | 173 |
| Resin B | 7.0 | 1840 | 160 | 150 |
| Resin C | 8.9 | 1100 | 66 | 76 |
| Resin D | 9.5 | 2200 | 340 | 147 |
| Resin E | 3.5 | 1250 | 96 (*1) | 99 |
| Resin F | 6.9 | 680 | 20 (*2) | 50 |

Then, the jitter, the tilt, the Push-Pull signal were measured in terms of each of optical recording media including the first intermediate layer and the second intermediate layer in accordance with combinations of the ultraviolet curing resin materials (A to F) as shown in Table 2. Moreover, the peeling property between the optically transparent stamper and the second intermediate layer when preparing each of the optical recording media was evaluated. Results are shown in Table 2.

Methods of controlling the elastic moduli and the shrinkage ratios in terms of the resin A to resin F will be described below.

In terms of the resin A, the elastic modulus and the shrinkage ratio were controlled by combining an acrylic monomer configured to increase the crosslink density and an acrylic monomer having a rigid structure as the crosslink structure. In terms of the resin F, the elastic modulus and the shrinkage ratio were controlled by combining an acrylic oligomer having a large molecular weight for each acryloyl group and having a flexible structure and a monofunctional acrylic monomer.

Meanwhile, the resin E has the smallest shrinkage ratio. This is because the cationic resin is used as the resin E. Moreover, in terms of the resin B, the resin C, and the resin D, the desired elastic moduli and the shrinkage ratios were obtained by appropriately controlling monomer structures thereof.

(Table 2)

| | Ultraviolet curing resin 1 | | | Ultraviolet curing resin 2 | | | Evaluation results | | | |
|---|---|---|---|---|---|---|---|---|---|---|
| | Resin type | Shrinkage ratio (%) | Elastic modulus (30˚C) | Resin type | Shrinkage ratio (%) | Elastic modulus (150˚C) | Jitter (%) | Tilt (deg) | Peeling property | Push Pull signal |
| Example 1 | E | 3.5 | 1250 | A | 11.9 | 1050 | 6.4 | 0.30 | ○ | 0.42 |
| Example 2 | F | 6.9 | 680 | A | 11.9 | 1050 | 6.4 | 0.27 | ○ | 0.41 |
| Example 3 | A | 11.9 | 3000 | A | 11.9 | 1050 | 6.9 | 1.7 | ○ | 0.42 |
| Example 4 | D | 9.5 | 2200 | D | 9.5 | 340 | 6.8 | 1.0 | ○ | 0.37 |
| Comparative Example 1 | F | 6.9 | 680 | B | 7.0 | 160 | - | 0.25 | × | 0.07 |
| Comparative Example 2 | C | 8.9 | 1100 | C | 8.9 | 66 | - | 0.74 | △ | 0.05 |

EP 1 739 667 B1

The following facts are clear from the results shown in Table 2. Specifically, in the multilayer optical recording medium including two recording layers, the recording characteristics (the jitter, the tilt, and the Push-Pull signal) of the optical recording medium exhibit good balances when the second intermediate layer (the outermost resin layer) is formed by use of the ultraviolet curing resin (A or D) having the elastic modulus at 150˚C equal to or above 300 MPa and the shrinkage ratio equal to or above 6% (Example 1 to Example 4). Moreover, it is also clear that the peeling property between the optically transparent stamper and the second intermediate layer is favorable upon preparation of such an optical recording medium.

Among them, the recording characteristics (the jitter, the tilt, and the Push-Pull signal) of the optical recording medium exhibit good balances when the second intermediate layer (the outermost resin layer) is formed by use of the ultraviolet curing resin A having the elastic modulus at 150˚C equal to or above 300 MPa and the shrinkage ratio equal to or above 6% and the first intermediate layer is formed by use of the ultraviolet curing resin E having the shrinkage ratio equal to or below 4% (Example 1) and when the second intermediate layer is formed by use of the ultraviolet curing resin A and the first intermediate layer is formed by use of the ultraviolet curing resin F having the elastic modulus at 30˚C equal to or below 700 MPa (Example 2). In particular, it is apparent that the tilt is small and the warpage of the substrate of the optical recording medium is therefore small.

On the contrary, in the multilayer optical recording medium including two recording layers, the recording characteristics (the jitter, the tilt, and the Push-Pull signal) of the optical recording medium exhibit poor balances when the second intermediate layer (the outermost resin layer) is formed by use of the ultraviolet curing resin (B or C) having the elastic modulus at 150˚C below 300 MPa (Comparative Example 1 and Comparative Example 2). Moreover, it is also clear that the optically transparent stamper cannot be peeled off from the intermediate layer smoothly upon preparation of such an optical recording medium.

That is, when the second intermediate layer is formed by use of the ultraviolet curing resin B having the elastic modulus at 150˚C equal to 160 MPa (Comparative Example 1) and when the second intermediate layer is formed by use of the ultraviolet curing resin C having the elastic modulus at 150˚C equal to 66 MPa (Comparative Example 2), it is clear that the Push-Pull signals are extremely small in these cases and the tracking servo is not applied, and that it is not possible to evaluate recording and reproducing performances. This is presumably because the groove formed on the second intermediate layer is deformed and therefore becomes shallower due to heat generation in the course of the film formation when forming the second reflective film on the second intermediate layer made of the resin having a low elastic modulus at 150˚C and amplitude of the Push-Pull signal becomes extremely small as a consequence.

Meanwhile, results of measurement of the power margins of the first recording layer and the second recording layer of the optical recording media according to Example 1 to Example 4 will be described.

In the optical recording medium of Example 1, the value P1 was around 18.57 mW and the value P2 was around 22.73 mW in terms of the first recording layer. On the contrary, the value P1 was around 21.52 mW and the value P2 was around 30.09 mW in terms of the second recording layer. As a result of calculations using these results, the power margin of the first recording layer was equal to 20.1% and the power margin of the second recording layer was equal to 33.2%.

In the optical recording medium of Example 2, the value P1 was around 18.21 mW and the value P2 was around 22.33 mW in terms of the first recording layer. On the contrary, the value P1 was around 21.76 mW and the value P2 was around 30.09 mW in terms of the second recording layer. As a result of calculations using these results, the power margin of the first recording layer was equal to 20.3% and the power margin of the second recording layer was equal to 32.2%.

In the optical recording medium of Example 3, the value P1 was around 18.61 mW and the value P2 was around 22.59 mW in terms of the first recording layer. On the contrary, the value P1 was around 21.13 mW and the value P2 was around 30.40 mW in terms of the second recording layer. As a result of calculations using these results, the power margin of the first recording layer was equal to 19.3% and the power margin of the second recording layer was equal to 36.0%.

In the optical recording medium of Example 4, the value P1 was around 18.48 mW and the value P2 was around 22.75 mW in terms of the first recording layer. On the contrary, the value P1 was around 21.80 mW and the value P2 was around 31.37 mW in terms of the second recording layer. As a result of calculations using these results, the power margin of the first recording layer was equal to 20.7% and the power margin of the second recording layer was equal to 36.0%.

In the optical recording media of Comparative Example 1 and Comparative Example 2, the tracking servo was not applied due to the extremely small Push-Pull signals, and it was not possible to evaluate recording and reproducing performances. For this reason, it was not possible to evaluate the power margins of the second recording layers.

(Example 5)

The intermediate layer was configured to include three resin layers by modifying the method of forming the intermediate layer described above in "(1) Preparation of optical recording medium" as follows. An optical recording medium was prepared as similar to "(1) Preparation of optical recording medium" except the method of forming the intermediate layer described below.

(Method of forming intermediate layer)

Ultraviolet curing resin (the resin D) was dropped on a first reflective layer, and a coating film was formed in a thickness of about 4 $\mu$m in accordance with the spinner method. Thereafter, the ultraviolet curing resin was cured by irradiating ultraviolet rays to form a first resin layer. This first resin layer is used for protecting a reflective layer. Ultraviolet curing resin 1 (the resin F) for forming a second resin layer was dropped in a round shape on the first resin layer. Then, a coating film was formed in a thickness of about 23 $\mu$m in accordance with the spinner method.

Meanwhile, predetermined ultraviolet curing resin 2 (the resin A) for forming a third resin layer (the outermost resin layer) was dropped in a round shape on a surface including formation of guide grooves of an optically transparent stamper formed in advance. Then, a coating film was formed in a thickness of about 23 $\mu$m in accordance with the spinner method.

Next, the first substrate was attached to the optically transparent stamper so as to allow the coating film made of the ultraviolet curing resin 1 to face the coating film made of the ultraviolet curing resin 2. Subsequently, ultraviolet rays were irradiated from the optically transparent stamper side, thereby curing and bonding the ultraviolet curing resin 1 and ultraviolet curing resin 2 together. Thereafter, the optically transparent stamper was peeled off.

By conducting the above-described procedures, the intermediate layer having the thickness of about 50 $\mu$m and including lamination of the first resin layer, the second resin layer, and the third resin layer (the outermost layer) was manufactured. Here, it was confirmed that the guide grooves formed on the optically transparent stamper were transferred to the surface of the second intermediate layer by use of the AFM.

This optical recording medium was subjected to the measurement of the jitter as described in the foregoing clause (2), the measurement of the Push-Pull signal as described in the foregoing clause (4), and the measurement of the power margins as described in the foregoing clause (8). Results of measurements of the jitter and the Push-Pull signal in terms of the second recording layer are shown in Table 3. Here, the measurement of the jitter and the Push-Pull signal was performed in a position at a radius of 23 mm, a position at a radius of 40 mm, and a position at a radius of 58 mm of the optical recording medium.

(Table 3)

| | Radial position (mm) | | |
|---|---|---|---|
| | 23 | 40 | 58 |
| Push-Pull signal | 0.41 | 0.43 | 0.39 |
| Jitter (%) | 7.1 | 7.1 | 7.4 |

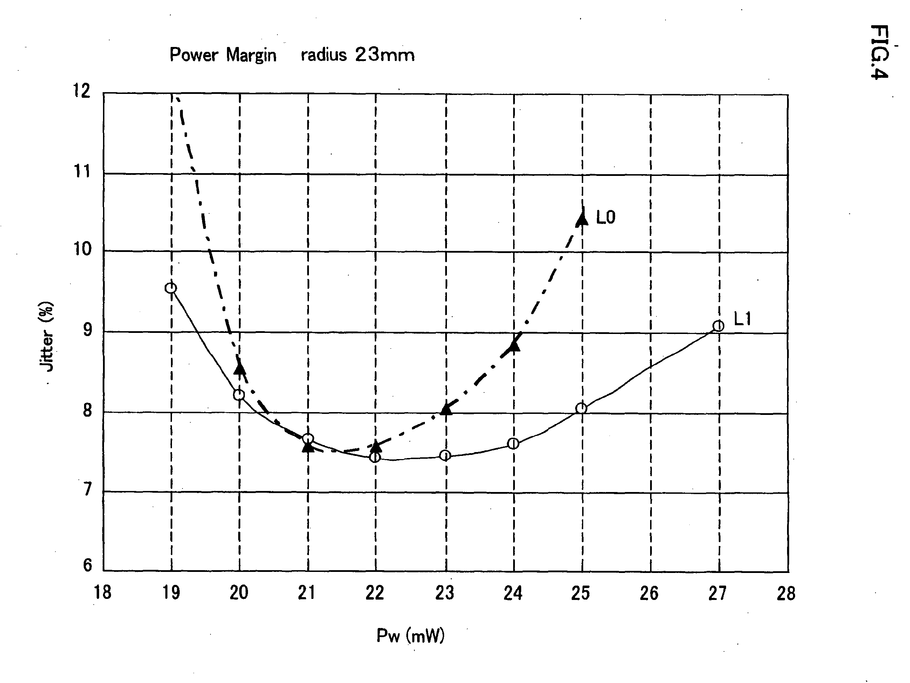

Referring to Table 3, it is clear that favorable recording characteristics are obtained in any of the radial positions. Moreover, results of measurement of the power margins in terms of the first recording layer and the second recording layer of the optical recording medium are shown in Fig. 4. In Fig. 4, "L0" denotes the power margin of the first recording layer and "L1" denotes the power margin of the second recording layer. As shown in Fig. 4, the value P1 was around 19.8 mW and the value P2 was around 24.2 mW in terms of the first recording layer. On the contrary, the value P1 was around 19.4 mW and the value P2 was around 27 mW in terms of the second recording layer. As a result of calculations using these results, the power margin of the first recording layer was equal to 19% and the power margin of the second recording layer was equal to 32%. From this result, it is clear that the second recording layer has the wider power margin.

(Example 6)

An optical recording medium was prepared as similar to Example 5 except that the following method of forming the intermediate layer was applied to Example 5 instead.

(Method of forming intermediate layer)

Ultraviolet curing resin (the resin D) was dropped on a first reflective layer, and a coating film was formed in a thickness of about 4 $\mu$m in accordance with the spinner method. Thereafter, the ultraviolet curing resin was cured by irradiating ultraviolet rays to form a first resin layer. This first resin layer is used for protecting a reflective layer.

Here, for convenience of experimental operations, subsequent operations were carried out after leaving the sample to stand for about one week.

Ultraviolet curing resin 1 (the resin F) for forming a second resin layer was dropped in a round shape on the first resin layer. Then, a coating film was formed in a predetermined thickness in accordance with the spinner method.

Meanwhile, predetermined ultraviolet curing resin 2 (the resin A) for forming a third resin layer (the outermost resin layer) was dropped in a round shape on a surface where guide grooves of an optically transparent stamper was formed in advance. Then, a coating film was formed in a predetermined thickness in accordance with the spinner method.

Next, the first substrate was attached to the optically transparent stamper so as to allow the coating film made of the ultraviolet curing resin 1 to face the coating film made of the ultraviolet curing resin 2. Subsequently, ultraviolet rays were irradiated from the optically transparent stamper side, thereby curing and attaching the ultraviolet curing resin 1 and ultraviolet curing resin 2 together. Thereafter, the optically transparent stamper was peeled off. By conducting the above-described procedures, the intermediate layer having the thickness of about 50 $\mu$m and including lamination of the first resin layer, the second resin layer, and the third resin layer (the outermost resin layer) was manufactured. Thickness of the second resin layer and rough thickness of the third resin layer (the outer most resin layer) are shown in Table 4.

The optical recording media thus obtained were subjected to the measurement of the tilt as described in the foregoing clause (3) and the measurement of the Push-Pull signal (at a radius of 23mm) as described in the foregoing clause (4). Results are shown in Table 4.

(Table 4)

| Thickness ($\mu$m) | | Ratio of thicknesses | Tilt (deg) | Push-Pull signal |
|---|---|---|---|---|
| Second resin layer | Third resin layer (outermost resin layer) | Second resin layer : Third resin layer | | |
| 15 | 31 | 1:2 | 1.7 | 0.51 |
| 18 | 28 | 1:1.5 | 1.79 | 0.50 |
| 23 | 23 | 1:1 | 1.04 | 0.50 |
| 28 | 18 | 1.5:1 | 0.95 | 0.50 |
| 31 | 15 | 2:1 | 1.14 | 0.50 |

Although the present invention has been described above by use of specific aspects, it is obvious to those skilled in the art that various modifications and alterations are possible without departing from the intention and the scope of the present invention, as defined in the appended claims.

Industrial applicability

According to the present invention, a recording characteristic of an optical recording medium formed on a transparent substrate and provided with multiple dye recording layers is improved.

The present invention is based upon the Japanese Application (Japanese Patent Application No. 2004 - 127149) filed on April 22, 2004.

Brief Description of the Drawings

Figure 1    is a view for explaining a preferred example of an optical recording medium applying this embodiment.

Figures 2    are schematic drawings for explaining the method of manufacturing an optical recording medium applying this embodiment.

Figure 3    is a schematic drawing showing an example of an optical recording medium applying this embodiment.

Figure 4    is a view denoting a result of calculations of the power margin of the first recording layer and the second recording layer of the optical recording medium of Example 5.

Description of Reference Numerals and Signs

| | |
|---|---|
| 100,300 | optical recording medium |
| 101,201,301 | first substrate |
| 102,202,302 | first recording layer |
| 103,203,303 | first reflective layer |
| 104a,204a | first intermediate layer |
| 104b, 204b | second intermediate layer |
| 105,205,305 | second recording layer |
| 106,206,306 | second reflective layer |
| 107,207,307 | adhesive layer |
| 108,208,308 | second substrate |
| 110,310 | laser beam |
| 304 | intermediate layer |
| 304a | first resin layer |
| 304b | second resin layer |
| 304c | outermost resin layer |

**Claims**

1. An optical recording medium (300) comprising:

   at least two recording layers (302, 305) provided on a substrate (301) and capable of recording and reading information by use of irradiated light; and
   an intermediate layer (304) provided between the two recording layers (302, 305),
   wherein, among the two recording layers (302, 305), the recording layer on a near side in relation to the substrate (301) is defined as a first recording layer (302) while the recording layer on a far side in relation to the substrate (301) is defined as a second recording layer (305),
   a predetermined groove serving as a recording track is formed on a surface on an opposite side to the substrate side out of both surfaces of the intermediate layer (304), and
   the intermediate layer (304) is formed of a plurality of resin layers and a resin layer on which the predetermined groove serving as the recording track is formed is defined as an outermost resin layer (304c),
   **characterized in that** the elastic modulus at 150˚C of the resin used for the outermost resin layer (304c) is set equal to or above 300 MPa.

2. The optical recording medium according to claim 1,
   wherein resin having a different elastic modulus from those of other layers constituting the intermediate layer is applied for the outermost resin layer.

3. The optical recording medium according to claim 1,
   wherein the substrate is formed of resin, and

(the elastic modulus at 150˚C of the resin used for the outermost resin layer) ≥ (an elastic modulus at 150˚C of the resin constituting the substrate) holds true.

4.  The optical recording medium according to any one of claims 2 to 3,
    wherein the elastic modulus of the resin used for the outermost resin layer at 150˚C is set higher than an elastic modulus of resin used for other resin layers at 150˚C constituting the intermediate layer.

5.  The optical recording medium according to any one of claims 1 to 4,
    wherein a shrinkage ratio, as measured in accordance with the specific gravity method, of the resin used for the outermost resin layer is set equal to or above 6%.

6.  The optical recording medium according to any one of claims 1 to 5,
    wherein a thickness of the outermost resin layer is set equal to or above 5% of a thickness of the entire intermediate layer.

7.  The optical recording medium according to any one of claims 1 to 6,
    wherein resin having an elastic modulus at 30˚C equal to or below 1500 MPa is used for the resin layers other than the outermost resin layer.

8.  The optical recording medium according to any one of claims 1 to 7,
    wherein resin having a shrinkage ratio, as measured in accordance with the specific gravity method, equal to or below 4% is used for the resin layers other than the outermost resin layer.

9.  The optical recording medium according to any one of claims 1 to 8,
    wherein the intermediate layer is formed of three resin layers.

10. The optical recording medium according to claim 1,
    wherein the intermediate layer is formed of a first layer and a second layer and resin having different elastic moduli is used in the respective layers.

11. The optical recording medium according to claim 10,
    wherein the intermediate layer is formed of the first layer and the second layer, and
    the resin constituting the second layer has a higher elastic modulus than the resin constituting the first layer.

12. The optical recording medium according to claim 1,
    wherein the intermediate layer is formed of the first layer and the second layer, and
    the resin constituting the second layer has an elastic modulus at 150˚C equal to or above 300 MPa.

13. The optical recording medium according to any one of claims 10 to 12,
    wherein a shrinkage ratio, as measured in accordance with the specific gravity method, of the resin constituting the second layer is equal to or above 6%.

14. The optical recording medium according to any one of claims 10 to 13,
    wherein a relation between a thickness of the first layer (Da) and a thickness of the second layer(Db) satisfies (Da/Db) = (1/4) to (4/1).

15. The optical recording medium according to any one of claims 10 to 14,
    wherein the intermediate layer comprises:

    the first layer made of resin having an elastic modulus at 30˚C equal to or below 1500 MPa; and
    the second layer laminated on the first layer and made of resin having an elastic modulus at 150˚C equal to or above 300 MPa.

16. The optical recording medium according to any one of claims 11 to 15,
    wherein a shrinkage ratio, as measured in accordance with the specific gravity method, of the resin constituting the first layer is equal to or below 4%.

17. The optical recording medium according to any one of claims 1 to 16,

wherein the resin layers constituting the intermediate layer are formed of ultraviolet curing resin.

**18.** The optical recording medium according to any one of claims 1 to 17,
wherein the recording layers contain an organic dye.

**19.** The optical recording medium according to any one of claims 1 to 18, further comprising:

a first reflective layer provided between the first recording layer and the intermediate layer; and
a second reflective layer provided on the second recording layer,
wherein a value (a thickness of the second reflective layer) / (a thickness of the first reflective layer) is set in a
range from 2 to 20 inclusive.

**Patentansprüche**

**1.** Optisches Aufzeichnungsmedium (300), umfassend:

mindestens zwei Aufzeichnungsschichten (302, 305), die auf einem Substrat (301) vorgesehen sind und zum
Aufzeichnen und Lesen von Informationen unter Verwendung von abgestrahltem Licht geeignet sind; und
eine Zwischenschicht (304), die zwischen den beiden Aufzeichnungsschichten (302, 305) vorgesehen ist,
worin unter den zwei Aufzeichnungsschichten (302, 305) die Aufzeichnungsschicht an der in bezug auf das
Substrat (301) nahen Seite als erste Aufzeichnungsschicht (302) definiert wird, während die Aufzeichnungsschicht an der in bezug auf das Substrat (301) fernen Seite als zweite Aufzeichnungsschicht (305) definiert wird,
eine als Aufzeichnungsspur vorbestimmte Rille auf einer Oberfläche auf der Seite von beiden Oberflächen der
Zwischenschicht (304) gebildet ist, die der Substratseite gegenüber liegt, und
die Zwischenschicht (304) aus einer Vielzahl von Harzschichten gebildet ist und eine Harzschicht, auf der die
als Aufzeichnungsspur dienende vorbestimmte Rille gebildet ist, als äusserste Harzschicht (304c) definiert wird,
**dadurch gekennzeichnet, dass** der Elastizitätsmodul des Harzes, das für die äusserste Harzschicht (304c)
verwendet wird, bei 150˚C auf 300 MPa oder mehr eingestellt wird.

**2.** Optisches Aufzeichnungsmedium gemäss Anspruch 1,
worin ein Harz mit einem Elastizitätsmodul, der von denen der anderen Schichten, die die Zwischenschicht bilden,
verschieden ist, für die äusserste Harzschicht verwendet wird.

**3.** Optisches Aufzeichnungsmedium gemäss Anspruch 1,
worin das Substrat aus einem Harz gebildet ist und (Elastizitätsmodul des für die äussere Harzschicht verwendeten
Harzes bei 150˚C) ≥ (Elastizitätsmodul des das Substrat bildenden Harzes bei 150˚C) gilt.

**4.** Optisches Aufzeichnungsmedium gemäss mindestens einem der Ansprüche 2 bis 3,
worin das Elastizitätsmodul des für die äussere Harzschicht verwendeten Harzes bei 150˚C höher eingestellt ist als
ein Elastizitätsmodul des Harzes bei 150˚C, das für die anderen, die Zwischenschicht bildenden Harzschichten
verwendet wird.

**5.** Aufzeichnungsmedium gemäss mindestens einem der Ansprüche 1 bis 4,
worin ein gemäss dem Dichtemessverfahren gemessenes Schwindungsverhältnis des Harzes, das für die äusserste
Harzschicht verwendet wird, auf 6 % oder mehr eingestellt ist.

**6.** Optisches Aufzeichnungsmedium gemäss mindestens einem der Ansprüche 1 bis 5,
worin die Dicke der äussersten Harzschicht auf 5 % oder mehr der Dicke der gesamten Zwischenschicht eingestellt
ist.

**7.** Optisches Aufzeichnungsmedium gemäss mindestens einem der Ansprüche 1 bis 6,
worin ein Harz mit einem Elastizitätsmodul bei 30˚C von 1.500 MPa oder weniger für die Harzschichten verwendet
wird, die von der äussersten Harzschicht verschieden sind.

**8.** Optisches Aufzeichnungsmedium gemäss mindestens einem der Ansprüche 1 bis 7,
worin ein Harz mit einem gemäss dem Dichteverfahren gemessenen Schwindungsverhältnis von 4 % oder weniger
für die Harzschichten verwendet wird, die von der äussersten Harzschicht verschieden sind.

**9.** Optisches Aufzeichnungsmedium gemäss mindestens einem der Ansprüche 1 bis 8, worin die Zwischenschicht aus drei Harzschichten gebildet ist.

**10.** Optisches Aufzeichnungsmedium gemäss Anspruch 1, worin die Zwischenschicht aus einer ersten Schicht und einer zweiten Schicht gebildet ist und Harze mit verschiedenen Elastizitätsmodulen für die entsprechenden Schichten verwendet werden.

**11.** Optisches Aufzeichnungsmedium gemäss Anspruch 10, worin die Zwischenschicht aus einer ersten Schicht und einer zweiten Schicht gebildet ist und das die zweite Schicht bildende Harz einen höheren Elastizitätsmodul aufweist als das die erste Schicht bildende Harz.

**12.** Optisches Aufzeichnungsmedium gemäss Anspruch 1, worin die Zwischenschicht aus einer ersten Schicht und einer zweiten Schicht gebildet ist und das die zweite Schicht bildende Harz einen Elastizitätsmodul bei 150˚C von 300 MPa oder höher aufweist.

**13.** Optisches Aufzeichnungsmedium gemäss mindestens einem der Ansprüche 10 bis 12, worin ein gemäss dem Dichteverfahren gemessenes Schwindungsverhältnis des Harzes, das die zweite Schicht bildet, 6 % oder höher ist.

**14.** Optisches Aufzeichnungsmedium gemäss mindestens einem der Ansprüche 10 bis 13, worin die Beziehung zwischen der Dicke der ersten Schicht (Da) und der Dicke der zweiten Schicht (Db) (Da/Db) = (1/4) bis (4/1) erfüllt.

**15.** Optisches Aufzeichnungsmedium gemäss mindestens einem der Ansprüche 10 bis 14, worin die Zwischenschicht folgendes umfasst:

die erste Schicht, hergestellt aus einem Harz mit einem Elastizitätsmodul bei 30˚C von 1.500 MPa oder weniger; und
die zweite Schicht, die auf der ersten Schicht laminiert ist und aus einem Harz mit einem Elastizitätsmodul bei 150˚C von 300 MPa oder mehr hergestellt ist.

**16.** Optisches Aufzeichnungsmedium gemäss mindestens einem der Ansprüche 11 bis 15, worin ein gemäss dem Dichteverfahren gemessenes Schwindungsverhältnis des Harzes, das die erste Schicht bildet, 4 % oder weniger ist.

**17.** Optisches Aufzeichnungsmedium gemäss mindestens einem der Ansprüche 1 bis 16, worin die Harzschichten, die die Zwischenschicht bilden, aus einem Ultraviolett-härtenden Harz gebildet sind.

**18.** Optisches Aufzeichnungsmedium gemäss mindestens einem der Ansprüche 1 bis 17, worin die Aufzeichnungsschichten einen organischen Farbstoff enthalten.

**19.** Optisches Aufzeichnungsmedium gemäss mindestens einem der Ansprüche 1 bis 18, ferner umfassend:

eine erste Reflexionsschicht, die zwischen der ersten Aufzeichnungsschicht und der Zwischenschicht vorgesehen ist; und
eine zweite Reflexionsschicht, die auf der zweiten Aufzeichnungsschicht vorgesehen ist,
worin der Wert (Dicke der zweiten Reflexionsschicht) / (Dicke der ersten Reflexionsschicht) im Bereich von 2 bis einschliesslich 20 eingestellt ist.

**Revendications**

**1.** Support d'enregistrement optique (300) comprenant :

au moins deux couches d'enregistrement (302, 305) disposées sur un substrat (301) et susceptibles d'enregistrer et de lire des informations en utilisant de la lumière irradiée ; et
une couche intermédiaire (304) disposée entre les deux couches d'enregistrement (302, 305),

dans lequel, parmi les deux couches d'enregistrement (302, 305), la couche d'enregistrement sur un côté proche par rapport au substrat (301) est définie en tant que première couche d'enregistrement (302) tandis que la couche d'enregistrement sur un côté éloigné par rapport au substrat (301) est définie en tant que seconde couche d'enregistrement (305),

une rainure prédéterminée servant de piste d'enregistrement est formée sur une surface sur un côté opposé au côté substrat parmi les deux surfaces de la couche intermédiaire (304), et

la couche intermédiaire (304) est formée d'une pluralité de couches de résine et une couche de résine sur laquelle la rainure prédéterminée servant de piste d'enregistrement est formée est définie en tant que couche de résine la plus extérieure (304c),

**caractérisé en ce que** le module d'élasticité à 150 ˚C de la résine utilisée pour la couche de résine la plus extérieure (304c) est fixé égal ou supérieur à 300 MPa.

**2.** Support d'enregistrement optique selon la revendication 1,
dans lequel une résine ayant un module d'élasticité différent de ceux d'autres couches constituant la couche intermédiaire est appliquée pour la couche de résine la plus extérieure.

**3.** Support d'enregistrement optique selon la revendication 1,
dans lequel le substrat est formé de résine, et (le module d'élasticité à 150 ˚C de la résine utilisée pour la couche de résine la plus extérieure) ≥ (un module d'élasticité à 150 ˚C de la résine constituant le substrat) reste vrai.

**4.** Support d'enregistrement optique selon l'une quelconque des revendications 2 à 3,
dans lequel le module d'élasticité de la résine utilisée pour la couche de résine la plus extérieure à 150 ˚C est fixé plus élevé qu'un module d'élasticité d'une résine utilisée pour d'autres couches de résine à 150 ˚C constituant la couche intermédiaire.

**5.** Support d'enregistrement optique selon l'une quelconque des revendications 1 à 4,
dans lequel un rapport de rétrécissement, tel que mesuré selon le procédé de gravité spécifique, de la résine utilisée pour la couche de résine la plus extérieure est fixé égal ou supérieur à 6 %.

**6.** Support d'enregistrement optique selon l'une quelconque des revendications 1 à 5,
dans lequel une épaisseur de la couche de résine la plus extérieure est fixée égale ou supérieure à 5 % d'une épaisseur de la couche intermédiaire entière.

**7.** Support d'enregistrement optique selon l'une quelconque des revendications 1 à 6,
dans lequel de la résine ayant un module d'élasticité à 30 ˚C égal ou inférieur à 1 500 MPa est utilisée pour les couches de résine autres que la couche de résine la plus extérieure.

**8.** Support d'enregistrement optique selon l'une quelconque des revendications 1 à 7,
dans lequel de la résine ayant un rapport de rétrécissement, tel que mesuré selon le procédé de gravité spécifique, égal ou inférieur à 4 % est utilisée pour les couches de résine autres que la couche de résine la plus extérieure.

**9.** Support d'enregistrement optique selon l'une quelconque des revendications 1 à 8,
dans lequel la couche intermédiaire est formée de trois couches de résine.

**10.** Support d'enregistrement optique selon la revendication 1,
dans lequel la couche intermédiaire est formée d'une première couche et d'une seconde couche et de la résine ayant des modules d'élasticité différents est utilisée dans les couches respectives.

**11.** Support d'enregistrement optique selon la revendication 10,
dans lequel la couche intermédiaire est formée de la première couche et de la seconde couche, et
la résine constituant la seconde couche a un module d'élasticité plus élevé que la résine constituant la première couche.

**12.** Support d'enregistrement optique selon la revendication 1,
dans lequel la couche intermédiaire est formée de la première couche et de la seconde couche, et
la résine constituant la seconde couche a un module d'élasticité à 150 ˚C égal ou supérieur à 300 MPa.

**13.** Support d'enregistrement optique selon l'une quelconque des revendications 10 à 12,

dans lequel un rapport de rétrécissement, tel que mesuré selon le procédé de gravité spécifique, de la résine constituant la seconde couche est égal ou supérieur à 6 %.

**14.** Support d'enregistrement optique selon l'une quelconque des revendications 10 à 13, dans lequel une relation entre une épaisseur de la première couche (Da) et une épaisseur de la seconde couche (Db) satisfait à (Da / Db) = (1 / 4) à (4 / 1).

**15.** Support d'enregistrement optique selon l'une quelconque des revendications 10 à 14, dans lequel la couche intermédiaire comprend :

la première couche faite de résine ayant un module d'élasticité à 30 ˚C égal ou inférieur à 1 500 MPa ; et
la seconde couche stratifiée sur la première couche et faite de résine ayant un module d'élasticité à 150 ˚C égal ou supérieur à 300 MPa.

**16.** Support d'enregistrement optique selon l'une quelconque des revendications 11 à 15, dans lequel un rapport de rétrécissement, tel que mesuré selon le procédé de gravité spécifique , de la résine constituant la première couche est égal ou inférieur à 4 %.

**17.** Support d'enregistrement optique selon l'une quelconque des revendications 1 à 16, dans lequel les couches de résine constituant la couche intermédiaire sont formées de résine à cuisson aux ultraviolets.

**18.** Support d'enregistrement optique selon l'une quelconque des revendications 1 à 17, dans lequel les couches d'enregistrement contiennent une teinture organique.

**19.** Support d'enregistrement optique selon l'une quelconque des revendications 1 à 18, comprenant en outre :

une première couche réfléchissante disposée entre la première couche d'enregistrement et la couche intermédiaire ; et
une seconde couche réfléchissante disposée sur la seconde couche d'enregistrement,
dans lequel une valeur (une épaisseur de la seconde couche réfléchissante) / (une épaisseur de la première couche réfléchissante) est fixée dans une plage de 2 à 20 incluse.

FIG.1

100 optical recording medium

108    second substrate

107    adhesive layer
106    second reflective layer

105    second recording layer

104b   second intermediate layer
                                      104   intermediate layer
104a   first intermediate layer

103    first reflective layer
102    first recording layer

101    first substrate

110   laser beam

EP 1 739 667 B1

## FIG.2

(a) 203 first reflective layer
202 first recording layer
201 first substrate

(b) 204a first intermediate layer
203
202
201

(c) 204b second intermediate layer
210 resin stamper

ultra violet rays
(d)
210
204b
204a
203
202
201

(e) 205 second recording layer
204b
204a
203
202
201

(f) 206 second reflective layer
205
204b
204a
203
202
201

(g) 208 second substrate
207 adhesive layer
206
205
204b
204a
203
202
201

# FIG.3

300 optical recording medium

308 second substrate

307 adhesive layer

306 second reflective layer

surface A

305 second recording layer

304c outermost resin layer ⎤

⋮

304b second resin layer

304a first resin layer ⎦

⎬ 304

303 first reflective layer

302 first recording layer

301 first substrate

310 laser beam

EP 1 739 667 B1

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003331463 A
- EP 1288932 A
- JP 2003091868 A
- US 6270611 B1
- US 2003026937 A
- JP 2003296978 A
- JP 2004127149 A